(19) Europäisches Patentamt
European Patent Office
Office européen des brevets

(11) EP 4 680 191 B1

(12) # EUROPEAN PATENT SPECIFICATION

(45) Date of publication and mention of the grant of the patent:
**27.05.2026 Bulletin 2026/22**

(21) Application number: **24710748.5**

(22) Date of filing: **13.03.2024**

(51) International Patent Classification (IPC):
***A61K 8/81*** *(2006.01)* ***B01D 21/01*** *(2006.01)*
***C02F 1/52*** *(2023.01)* ***C02F 1/54*** *(2023.01)*
***C02F 11/14*** *(2019.01)* ***C08F 220/06*** *(2006.01)*
***C08F 220/56*** *(2006.01)* ***C08F 220/58*** *(2006.01)*
***C02F 103/10*** *(2006.01)* ***B01D 3/06*** *(2006.01)*
***C02F 11/121*** *(2019.01)* ***C02F 11/148*** *(2019.01)*
***B03D 3/06*** *(2006.01)*

(52) Cooperative Patent Classification (CPC):
(C-Sets available)
**C02F 11/148; B01D 21/01; B03D 3/06;**
**C08F 220/56;** B01D 2221/04; C02F 11/121;
C02F 2103/10 (Cont.)

(86) International application number:
**PCT/EP2024/056708**

(87) International publication number:
**WO 2024/189103 (19.09.2024 Gazette 2024/38)**

(54) **METHOD FOR TREATING A SUSPENSION OF SOLID PARTICLES IN WATER USING A POLYMER IN A CRYSTALLINE FORM OF 2-ACRYLAMIDO-2-METHYLPROPANESULPHONIC ACID SODIUM SALT**

VERFAHREN ZUR BEHANDLUNG EINER SUSPENSION VON FESTEN PARTIKELN IN WASSER MIT EINEM POLYMER IN KRISTALLINER FORM VON 2-ACRYLAMIDO-2-METHYLPROPANSULFONSÄURE-NATRIUMSALZ

PROCÉDÉ DE TRAITEMENT D’UNE SUSPENSION DE PARTICULES SOLIDES DANS DE L’EAU À L’AIDE D’UN POLYMÈRE SOUS FORME CRISTALLINE DE SEL DE SODIUM D’ACIDE 2-ACRYLAMIDO-2-MÉTHYLPROPANESULFONIQUE

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **13.03.2023 FR 2302309**

(43) Date of publication of application:
**21.01.2026 Bulletin 2026/04**

(73) Proprietor: **SNF Group**
**42160 Andrézieux-Bouthéon (FR)**

(72) Inventors:
- **FAVERO, Cédrick**
**42160 ANDREZIEUX-BOUTHEON (FR)**
- **LEGRAS, Benoit**
**42160 ANDREZIEUX-BOUTHEON (FR)**
- **KIEFFER, Johann**
**42160 ANDREZIEUX-BOUTHEON (FR)**

(74) Representative: **Ipsilon**
**Le Contemporain**
**50 Chemin de la Bruyère**
**69574 Dardilly Cedex (FR)**

(56) References cited:
**CN-A- 114 195 685**
**US-B2- 10 647 908**
**US-B2- 10 759 746**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).





(Cont. next page)

(52) Cooperative Patent Classification (CPC): (Cont.)

C-Sets
**C08F 220/56, C08F 220/585**

## Description

### Field of the invention

The present invention relates to a method for treating a suspension of solid particles in water, such as mining residues, using water-soluble polymers obtained from the crystalline form of 2-acrylamido-2-methylpropanesulphonic acid sodium salt. This method comprises the step of contacting said suspension with water-soluble polymers obtained from the crystalline form of 2-acrylamido-2-methylpropanesulphonic acid sodium salt.

The method according to the invention preferably consists, inter alia, in adding said water-soluble polymers to a thickener containing this suspension to be treated and/or in adding said polymers during the transport of said suspension to a deposition zone for its dehydration and solidification and/or in adding said polymers to said suspension and then in carrying out a mechanical processing, such as centrifugation, pressing or filtration.

### Prior art

The suspensions of solid particles in water include all types of sludge, residues or waste materials. Suspensions may result from the processing of ores. It may, for example, be industrial sludges or residues and all the washing and waste products resulting from mining operations, such as coal mines, diamond mines, phosphate mines, metal mines (aluminium, platinum, iron, gold, copper, silver, etc.). The suspensions can also result from sludges or extraction residues derived from the processing of oil sand. These suspensions of solid particles generally comprise organic and/or mineral particles, such as clays, sediments, sand, metal oxides, oil, etc., for example, mixed with water.

The term "suspension" is used hereinafter (including the specification of the invention) and refers to suspensions of solid particles as described above.

The processing of these residues and other waste materials has become a technical, environmental and public order problem. The use of synthetic or natural polymers, such as coagulants and flocculants, to separate solids from the liquid is a common practice.

For a long time, and even today, the mineral sludge produced by physical or chemical treatment methods of ores was stored openly in basins, ponds, retention dams or embankments in semi-liquid form. These large volumes of stored sludge therefore create a real danger, especially if the dikes fail.

Since traditional storage solutions are obviously dangerous, more and more national regulations have been published, prohibiting the abandonment of these areas. The regulations also call for an obligation to rehabilitate these sites, i.e. the treatment and consolidation of soils.

The improvement of chemical and mechanical treatments of residues or sludge is therefore a significant challenge.

Various attempts have been made in the last decades to increase the sedimentation rate of the residues in order to efficiently recycle the water and reduce the volume of the residues. The main physical treatments include centrifugation, filtration, electrophoresis and electrocoagulation.

On the other hand, chemical methods have emerged. They include a method involving the addition of chemicals, such as sodium silicate, organic flocculants, inorganic coagulants, oxidation and reduction agents and, more recently, carbon dioxide.

In 1979-1980, Alsthom Atlantique and SNF (U.S. Pat. No. 4,347,140) developed a multistage flocculation system (super-flocculation) specifically designed to treat clay residue pools from phosphate production in Florida.

The suspension treatment was studied continuously: in 1986 according to the method described in document CA 1 273 888, then in 1994 in document WO 96/05146, in 2000 in document CA 2 407 869 and in 2004 in document CA 1 515 581.

In the document CA 2 682 542, the method involves the addition of modified polymers by copolymerization and/or branching. Polymers with hydrophobic groups, which have also been studied, have shown an improvement in the treatment of suspensions.

Document CN 114 195 685 A, US 10 759 746 B2 and US 10 647 908 B2 disclose methods for treating a suspension of solid particles in water.

Despite great advances in recent years, there is still a need to develop polymers that increase the speed and quantity of water released from suspensions. The improvement of the physical characteristics of the sludge produced is also sought.

### Disclosure of the invention

The Applicant has found and developed a method for treating suspensions of solid particles in water using at least one water-soluble polymer obtained from the crystalline form of 2-acrylamido-2-methylpropanesulphonic acid sodium

salt, referred hereafter as ATBS.Na, which makes it possible to meet the aforementioned needs.

Quite surprisingly, the use of at least one water-soluble polymer obtained from the crystalline form of ATBS.Na makes it possible to effectively treat suspensions of solids. More precisely, the present invention relates to a method for treating a suspension of solid particles in water according to claim 1.

The presence of the monomer in the crystalline form of ATBS.Na in the monomeric composition of the water-soluble polymer gives the latter particular properties, making it possible to improve the treatment of the solid particles in suspensions.

According to the invention, a water-soluble polymer obtained from the crystalline form of ATBS.Na improves the performances of suspension treatments, which include:

- increasing sludge concentration, for instance at the outlet of a thickener,
- the dehydration step and the steps of drying and solidifying the suspensions when they are discharged onto the ground, and
- mechanically treating the treated suspensions.

The improved performances of the polymers obtained from the crystalline form of ATBS.Na for treating suspensions help reduce the quantity of product necessary and therefore reduce the overall water consumption and emissions of greenhouse gases such as the $CO_2$.

Another disclosure (not claimed) relates to a method for flocculating a suspension of solid particles in water, comprising bringing said suspension into contact with at least one water-soluble polymer, said polymer being obtained from the crystalline form of ATBS.Na.

**Description of the invention**

The term "polymer" should be understood to mean a homopolymer or a copolymer. The term "copolymer" should be understood to mean a polymer obtained from at least two different monomers. It may therefore be a copolymer of at least two monomers chosen from anionic monomers, cationic monomers, non-ionic monomers, zwitterionic monomers, hydrophobic monomers and the mixtures thereof.

The term "hydrophilic monomer" should be understood to mean a monomer that has an octanol-water partition coefficient, $K_{ow}$, equal or less than 1, in which the partition coefficient $K_{ow}$ is determined at 25°C in an octanol-water mixture with a volume ratio of 1/1, at a pH of between 6 and 8.

The term "crystal" or "crystalline form" refers to a solid material whose constituents (such as atoms, molecules, or ions) are arranged in a highly ordered microscopic structure, forming a crystal lattice that extends in all directions. It does not encompass amorphous solid.

The term "hydrophobic monomer" should be understood to mean a monomer that has an octanol-water partition coefficient, $K_{ow}$, greater than 1, in which the partition coefficient $K_{ow}$ is determined at 25°C in an octanol-water mixture with a volume ratio of 1/1, at a pH of between 6 and 8.

The octanol-water partition coefficient, $K_{ow}$, represents the ratio of concentrations (g/L) of a monomer between the octanol phase and the aqueous phase. It is defined as follows:

[Math 1]

$$K_{ow} = \frac{[monomer]_{octanol}}{[monomer]_{water}}$$

By definition, a water-soluble polymer is a polymer that gives an aqueous solution without insoluble particles when it is dissolved while stirring at 25°C and with a concentration of 50 $g.L^{-1}$ in water.

"X and/or Y" should be understood to mean "X", or "Y", or "X and Y".

The invention also includes all possible combinations of the various embodiments disclosed, whether they are preferred embodiments or given by way of example. Furthermore, when ranges of values are indicated, the limit values are included in these ranges. The disclosure also includes all of the combinations between the limit values of these ranges of values. For example, the ranges of values "1-20, preferably 5-15" imply disclosure of the ranges "1-5", "1-15", "5-20" and "15-20" and the values 1, 5, 15 and 20.

**Crystalline form of 2-acrylamido-2-methylpropanesulphonic acid sodium salt**

The crystalline form of ATBS.Na has an X-ray powder diffraction pattern comprising peaks at 11.7°; 12,2°; 13,2°;

13,5°; 15,6°; 16,8°; 17,8°; 18,5°; 19,1°; 20,6°; 21,4°; 23,3°; 25,1°; 25,8°; 26,9°; 29,1°; 29,5°; 31,0°; 33,0°; 33,6°; 34,4°; 35,2°; 35,9°; 37,1°; 38,4°; 39,6°; 41,1°; 42,9°; 45,1°; 46,0°; 47,2°; 47,6° 2-theta angles. The uncertainty of these peaks is generally of the order of +/- 0.1°.

X-ray crystallography, radiocrystallography or X-ray diffractometry is an analytical technique used to study the structure of crystalline matter on an atomic scale. It is based on the physical phenomenon of X-ray diffraction. A diffractometer with a copper source can be used.

A powder formed from a particular crystalline phase always shows diffraction peaks in the same directions. This diffraction pattern thus forms a true signature of the crystalline phase. It is therefore possible to determine the nature of each crystalline phase within a mixture or a pure product.

This signature is specific to each crystalline organic or inorganic compound, and is in the form of a list of peaks positioned at an angle of $2\theta$ (2-theta).

This technique is used to characterize matter, in particular the different crystalline forms that can exist for the same chemical molecule.

The crystalline form of ATBS.Na has a Fourier-transform infrared spectrum comprising peaks at 3576 $cm^{-1}$, 3485 $cm^{-1}$, 3310 $cm^{-1}$, 3079 $cm^{-1}$, 2975 $cm^{-1}$, 1658 $cm^{-1}$, 1629 $cm^{-1}$, 1543 $cm^{-1}$, 1403 $cm^{-1}$, 1321 $cm^{-1}$, 1301 $cm^{-1}$, 1205 $cm^{-1}$, 1187 $cm^{-1}$, 1163 $cm^{-1}$, 1046 $cm^{-1}$, 980 $cm^{-1}$, 629 $cm^{-1}$. The uncertainty of these peaks is generally of the order of +/- 8 $cm^{-1}$.

The infrared measurement is carried out by Fourier transform, for example using a Perkin Elmer Spectrum 100 spectrometer fitted with a single reflection ATR polarization accessory, with an accuracy of 8 $cm^{-1}$.

Fourier-transform infrared spectroscopy is the analysis of the vibrations emitted, absorbed or scattered by molecules. This technique is sensitive to so-called short interactions (influence of the unit mesh on the bonds). In most cases, the Fourier-transform infrared spectra of different crystalline systems differ significantly. The Fourier-transform infrared spectrum therefore reflects the details of the crystalline structure of a chemical compound.

Generally, and unless otherwise indicated, the X-ray diffraction pattern and the infrared spectrum are obtained at 20°C and at a pressure of 1 atmosphere absolute (101,325 Pa).

The crystalline form of ATBS.Na has a minimum ignition energy greater than 500 mJ, and preferably greater than 1000 mJ (1 mJ = $10^{-3}$ joule).

The minimum ignition energy represents the minimum energy that must be supplied to a product (chemical compound) to cause it to ignite. The energy may be electrical or thermal. The minimum ignition energy is an essential piece of information when considering the risk of explosion during product handling (transfer, storage, reaction, shaping, etc.).

The minimum ignition energy depends on the properties of the powder (composition) and its macromolecular structure (particle size, crystalline form, specific surface area).

In the case of solids, this energy is the minimum energy of an electric spark likely to ignite a cloud of dust. The higher the value of the minimum ignition energy, the less risk the solid presents when used, handled or stored.

The minimum ignition energy is measured in accordance with standard NF EN 13821.

The crystalline form of ATBS.Na exhibits 4 thermal phenomena with the differential scanning calorimetry technique, at 49.8°C; 144.8°C; 169.8°C and 254.3°C. The uncertainty relating to the observation of these phenomena is generally of the order of 10°C, advantageously 5°C or less.

The thermal phenomena are measured by differential scanning calorimetry (DSC). This technique uses the measurement of the variation in heat associated with the thermal denaturation of the compound when it is heated at constant speed, for example with a heating ramp of 10°C/minute.

**Method for producing the crystalline form of the sodium salt**

The method for producing the crystalline form of 2-acrylamido-2-methylpropanesulphonic acid sodium salt ATBS.Na comprises at least the following successive steps:

1) mixing of 2-acrylamido-2-methylpropanesulphonic acid ATBS with an aqueous solution $SA_1$ and at least one sodium salt base, advantageously for at least 1 minute, in order to form an aqueous solution or an aqueous suspension $SA_2$;
2) distillation, at a pressure of 700 mbar or less, of the aqueous solution or of the aqueous suspension $SA_2$ in order to form a suspension $S_1$;
3) solid-liquid separation of the suspension $S_1$ and isolation of the crystals of the suspension $S_1$ obtained at the end of step 2) in the form of a composition $C_1$.

The crystals obtained are in the crystalline form of ATBS.Na.

"Sodium salt(s) base" in the step 1), should be understood to mean at least one inorganic sodium salt Brønsted base, for example sodium hydroxide, sodium carbonate, sodium bicarbonate or mixtures thereof.

The temperature and the mixing time of step 1) may vary as a function, in particular, of the concentration of 2-acrylamido-2-methylpropanesulphonic acid referred hereafter as ATBS. A person skilled in the art knows how to adapt the temperature variation and the mixing time to optimize the formation of the crystals.

The method for producing the crystalline form of the ATBS sodium salt can be carried out on any form of ATBS, such as, for example, the needle-shape form or the hydrated form.

The production method may be carried out on ATBS of any degree of purity.

Therefore, the method may be carried out downstream of any type of method for producing ATBS. It may also be carried out on any forms of ATBS i.e. amorphous or crystalline, that have already been obtained.

**Step 1) of the method for producing the crystalline form of the ATBS sodium salt:**

The ATBS is produced by a production method as previously described (acrylonitrile, fuming sulphuric acid and isobutylene). The ATBS may be in the form of fine powder or shaped in a controlled manner by a method such as compaction, granulation or extrusion.

The ATBS may be added to an aqueous solution $SA_1$ before, after or in parallel with the sodium salt base, and preferably in parallel. Preferably, the aqueous solution is water.

The sodium salt base may be added as an aqueous solution $SA_1$. In this case, the aqueous solution of sodium salt base can be partially or totally the aqueous solution $SA_1$.

Advantageously, the concentration of ATBS sodium salt in the aqueous solution or in the aqueous suspension $SA_2$ is between 1% by weight and saturation, preferably between 10% by weight and saturation, more preferably between 20% by weight and saturation, more preferably between 30% by weight and saturation, more preferably between 40% by weight and saturation, and even more preferably between 50% by weight and saturation, by weight relative to the weight of the aqueous solution or of the aqueous suspension $SA_2$.

The ATBS and the sodium salt base may be added all at once or in several stages. They are preferably added in several stages. In some preferred embodiments, they are added all at once.

When they are added in several stages, the ATBS and the sodium salt base are added in fractions.

When the ATBS and the sodium salt base are added in fractions, there is no limit to the number of fractions, advantageously there are at least two fractions, and preferably at least three fractions.

There is no limitation to the order of addition of the ATBS and the sodium salt base. They may be added at the same time (i.e., in parallel), one after the other (the ATBS first, then the sodium salt base, or vice versa), or alternately (a first fraction pf ATBS, then a first fraction of the sodium salt base, followed by a second fraction of ATBS then a second fraction of the sodium salt base, and so on); they are preferably added at the same time.

When they are added one after the other or alternately, the second compound (whether it is the ATBS or the sodium salt base) can start being added before the first compound has finished being added.

A first fraction F1 of ATBS advantageously represents at least 1 mol% of the total of the ATBS present in the aqueous solution or the aqueous suspension $SA_2$, preferably at least 5 mol%, more preferably at least 10 mol%, even more preferably at least 15 mol% and even more preferably at least 20 mol%.

A second fraction F2 of ATBS advantageously represents at least 1 mol% of the total of the ATBS present in the aqueous solution or the aqueous suspension $SA_2$, preferably at least 5 mol%, more preferably at least 10 mol%, even more preferably at least 15 mol% and even more preferably at least 20 mol%.

A third fraction F3 of ATBS advantageously represents at least 1 mol% of the total of the ATBS present in the aqueous solution or the aqueous suspension $SA_2$, preferably at least 5 mol%, more preferably at least 10 mol%, even more preferably at least 15 mol% and even more preferably at least 20 mol%.

In one particular embodiment, the method is carried out continuously, in which case the ATBS and the sodium salt base are added continuously.

The quantity of ATBS in the aqueous solution or the aqueous suspension $SA_2$ is advantageously between 10 and 90% by weight relative to the total weight of the aqueous solution or of the aqueous suspension $SA_2$, preferably between 20 and 85% by weight, more preferably between 30 and 80% by weight.

The mixing of step 1) (ATBS + sodium salt base) is advantageously carried out at a temperature of between 0 and 90°C, preferably between 5 and 60°C, more preferably between 10 and 40°C, in order to obtain the aqueous solution or the aqueous suspension $SA_2$.

In one particular embodiment, the aqueous solution or the aqueous suspension $SA_2$ may comprise one or more organic solvents.

In some embodiments, the aqueous solution $SA_1$ may comprise one or more organic solvents.

The quantity of organic solvent may vary as a function of the temperature and the quantity of ATBS or sodium salt base. This quantity is not limited, provided it does not prevent the crystalline form of ATBS.Na from being obtained. A person skilled in the art knows how to determine this limit, which is a routine task. Generally, the aqueous solution or the aqueous suspension $SA_2$ comprises more water (by volume) than organic solvent.

The organic solvent or solvents are advantageously chosen from the following compounds:

- organic acids, advantageously carboxylic acids comprising between 1 and 8 carbon atoms;
- amides advantageously comprising between 1 and 8 carbon atoms;
- alcohols advantageously comprising between 1 and 8 carbon atoms;
- ketones advantageously comprising between 3 and 8 carbon atoms;
- ethers advantageously comprising between 2 and 8 carbon atoms;
- esters advantageously comprising between 2 and 8 carbon atoms;
- alkanes advantageously comprising between 4 and 8 carbon atoms, preferably between 5 and 6 carbon atoms;
- halogenated hydrocarbon compounds advantageously comprising between 1 and 8 carbon atoms;
- nitriles advantageously comprising between 1 and 8 carbon atoms; or
- mixtures thereof.

When an organic solvent is used in the invention, the temperature may be adjusted so that the solvent + water mixture remains in liquid form.

These compounds may be linear or branched. They may be saturated or comprise unsaturated bonds. An unsaturated bond corresponds to a double or triple bond (for example C=C or C≡C).

The organic solvent is preferably chosen from acrylonitrile, isopropanol, acrylic acid, acetic acid or mixtures thereof. The organic solvent is preferably acrylonitrile.

The organic solvent is generally in liquid form at the temperature at which steps 2) and 3) are carried out. Furthermore, it is advantageously partially miscible in water, and preferably completely miscible in water.

The organic solvent may, if necessary, be used to solubilize any impurities or by-products present with the ATBS used to form the aqueous solution or the aqueous suspension $SA_2$. However, ATBS is not necessarily soluble in the solvent.

In a preferred embodiment according to the invention, the aqueous solution or the aqueous suspension $SA_2$ does not contain organic solvent.

In a preferred embodiment according to the invention, the aqueous solution $SA_1$ does not contain organic solvent.

The time allowed for mixing the aqueous solution $SA_1$, the sodium salt base and the ATBS is advantageously at least 1 minute, preferably between 1 minute and 600 minutes, more preferably between 5 minutes and 400 minutes, and even more preferably between 10 minutes and 240 minutes.

The compounds of step 1) can be mixed using various technologies. Examples include, but are not limited to, reactors with stirrers, loop reactors, static mixers, microreactors, piston reactors, agitated filter dryers, for example by Nutsche, paddle mixers, twin-cone mixers, ploughshare mixers and disc mixers.

The pH in step 1) is advantageously controlled between 6 and 14, preferably between 8 and 14, more preferably between 10 and 14, even more preferably between 12 and 14, and even more preferably between 13 and 14.

The quantity of ATBS.Na in the aqueous solution $SA_2$ or the aqueous suspension $SA_2$ is advantageously between 10 and 90% by weight relative to the total weight of the aqueous solution or of the aqueous suspension $SA_2$, preferably 20 and 90%, preferably between 30 and 90% by weight, preferably between 50 and 90% by weight, preferably between 20 and 85% by weight, more preferably between 30 and 80% by weight.

**Step 2) of the method for producing the crystalline form of the ATBS sodium salt:**

The distillation of the aqueous solution or of the aqueous suspension $SA_2$ takes place at a pressure of 700 mbar or less. It generally takes place in a vacuum distillation device, which is typically an evaporator. It is therefore also referred to here as "vacuum distillation".

When the aqueous solution or the aqueous suspension $SA_2$ is distilled, typically by passing it through an evaporator, crystals of ATBS.Na begin to form. The aqueous solution or the aqueous suspension $SA_2$ comprising ATBS, at least one sodium salt base, and crystalline solid particles of ATBS.Na then coexist.

The aqueous solution or the aqueous suspension $SA_2$ can be distilled using an evaporator. This may be a falling film evaporator, or a rising film evaporator, or a scraped thin film evaporator, or a short path evaporator, or a forced circulation evaporator, or a spiral tube evaporator, or a flash evaporator. It may also be a continuously stirred reactor. Preferably, distillation takes place in a scraped thin film evaporator, a short path evaporator or a forced circulation evaporator. Even more preferably, distillation takes place in a scraped thin film evaporator.

Generally, an evaporator is a device comprising an inlet for solution to be treated (aqueous solution or aqueous suspension $SA_2$), an outlet for discharging the distilled solvent (the water and any organic solvents) and an outlet for discharging the suspension $S_1$.

The residence time of the aqueous solution or of the aqueous suspension $SA_2$ in the distillation device (advantageously under vacuum), which is advantageously an evaporator, in other words the distillation time at a pressure of 700 mbar or less, is advantageously between 1 second and 600 seconds, preferably between 3 seconds and 300

seconds, more preferably between 30 seconds and 100 seconds. The residence time corresponds to the time necessary to carry out step 2), i.e., the time required to prepare the suspension $S_1$ by distillation of the aqueous solution or of the aqueous suspension $SA_2$. In other words, when an evaporator is used, it is the residence time of the ATBS (and/or the crystalline form of its sodium salt) between the inlet and the outlet of the device. This residence time depends on the quantity of water (and any organic solvents), ATBS and sodium salt base present in the aqueous solution or the aqueous suspension $SA_2$. A person skilled in the art knows how to adapt this residence time in order to obtain the crystalline form of ATBS.Na depending on the quantity of the constituents of the aqueous solution or of the aqueous suspension $SA_2$.

The distillation can be carried out in a vertical or horizontal evaporator. Preferably, it is carried out in a vertical evaporator.

The aqueous solution or the aqueous suspension $SA_2$ can circulate co-current or counter-current to the vapours generated by the evaporation. Preferably, it circulates counter-current to the vapours in the distillation device. In other words, the aqueous solution or the aqueous suspension $SA_2$ is preferably introduced into the distillation device, advantageously an evaporator, co-current or counter-current to the distilled solvent.

The aqueous solution or the aqueous suspension $SA_2$ may circulate in one or more evaporators in series before obtaining the suspension $S_1$. Preferably, it circulates in a single evaporator.

The pressure during distillation is advantageously between 1 and 700 mbar absolute (1 mbar = 100 Pa). It is preferably less than 700 mbar absolute, more preferably less than 600 mbar absolute, more preferably less than 500 mbar absolute, more preferably less than 400 mbar absolute, more preferably less than 300 mbar absolute, more preferably less than 200 mbar absolute, more preferably less than 100 mbar absolute and even more preferably less than 50 mbar absolute, and advantageously greater than 1 mbar absolute. The absolute pressure corresponds to the pressure relative to zero pressure (vacuum).

In general, the pressure during distillation is preferably comprised between 10 and 700 mbar, preferably between 20 and 700 mbar, preferably between 40 and 700 mbar more preferably between 50 and 600 mbar, more preferably between 50 and 500 mbar, more preferably between 50 and 400 mbar, more preferably between 50 and 300 mbar, more preferably between 100 and 700 mbar, more preferably between 200 and 700 mbar, more preferably between 500 and 700 mbar, more preferably between 40 and 100 mbar.

In one particular embodiment, step 2) comprises a step 2') (optional) for helping the solvent to evaporate. Step 2') consists in increasing the temperature of the aqueous solution or of the aqueous suspension $SA_2$, in other words the distillation according to step 2') is carried out under heat.

In some embodiments, in step 2), the aqueous solution or the aqueous suspension $SA_2$ is heated, advantageously at a temperature of between 5°C and 95°C, preferably between more than 10°C and 60°C, more preferably between more than 20°C and 40°C.

The heating during distillation may be carried out by various technologies. Examples include, but are not limited to, heating with steam, with hot water, with electricity, by steam compression, or indeed by using a heat pump. Thus, the distillation device may be of the double-walled type, with a hot heat-transfer fluid circulating between the two walls.

The aqueous solution or the aqueous suspension $SA_2$ is advantageously heated to a temperature between more than 5°C and 95°C, preferably between more than 10°C and 60°C, more preferably between more than 20°C and 40°C.When the aqueous solution or the aqueous suspension $SA_2$ is heated, the temperature is advantageously greater than the temperature of step 1).

The temperature of the aqueous solution or of the aqueous suspension $SA_2$ advantageously increases at a ramp of between 0.1 and 10°C/hour, preferably between 0.2 and 9°C/hour, more preferably between 0.3 and 8°C/hour, and even more preferably between 0.5 and 5°C/hour.

In some embodiments, the temperature of the aqueous solution or of the aqueous suspension $SA_2$ advantageously increases at a ramp of between 10 and 150°C/hour, preferably between 30 and 110°C/hour, more preferably between 50 and 100°C/hour, and even more preferably between 60 and 90°C/hour.

The increase in temperature may not be constant throughout the whole process. For example, the aqueous solution or the aqueous suspension $SA_2$ may be heated by 5°C per hour for the first three hours, and then heated at a speed of 10°C per hour until the final temperature is reached.

According to another particular embodiment of the invention, step 2) may comprise a step 2") (optional), after step 2'), or instead of step 2'), that helps to increase the productivity and the profitability of the method of the invention by accelerating the crystallization of the ATBS into the crystalline form of its sodium salt. Step 2") consists in decreasing the temperature of the aqueous solution or of the aqueous suspension $SA_2$.

The aqueous solution or the aqueous suspension $SA_2$ is advantageously cooled to a temperature of between 5 and less than 95°C, preferably between 10 and less than 60°C, more preferably between 20 and less than 40°C and even more preferably between 10 and 40°C.

In some embodiments, step 2) further comprises a cooling step.

The cooling step is advantageously carried out at a temperature of between 5°C and 95°C, preferably between more than 10°C and 60°C, more preferably between more than 10°C and 40°C.

In some embodiments, the temperature of the cooling step is decreased at a ramp of between 0.1 and 8°C/hour, preferably between 0.2 and 8°C/hour, more preferably between 0.3 and 8°C/hour, and even more preferably between 0.5 and 5°C/hour.

In some embodiments, the temperature of the cooling step is advantageously lower than the temperature of heating of step 2) and/or step 1).

In some embodiments, the cooling step is carried out on the aqueous solution or the aqueous suspension $SA_2$ and/or the concentrated aqueous solution or the aqueous suspension $SA_2$ and/or the suspension $S_1$.

When the aqueous solution or the aqueous suspension $SA_2$ is cooled (step 2"), the temperature is advantageously less than the temperature of steps 2) and optionally 2').

According to a preferred embodiment, the temperature of step 2'') is the same or less than the temperature of step 1).

In some embodiments, no organic solvent or aqueous solution is added in step 2" for obtaining the crystals of ATBS.Na.

The temperature of the solution or of the aqueous suspension $SA_2$ advantageously decreases at a ramp of between 0.1 and 8°C/hour, preferably between 0.2 and 8°C/hour, more preferably between 0.3 and 8°C/hour, and even more preferably between 0.5 and 5°C/hour.

The decrease in temperature may not be constant throughout the whole process. For example, the aqueous solution or the aqueous suspension $SA_2$ may be cooled by 5°C per hour for the first three hours, and then cooled at a speed of 8°C per hour until the final temperature is reached.

While the aqueous solution or the aqueous suspension $SA_2$ is being cooled, crystals of ATBS.Na form and a suspension $S_1$ is obtained.

In one particular embodiment, previously obtained crystals of ATBS.Na may be added during this step in order to modify the formation of the suspension $S_1$, a process referred to as crystal seeding which makes it possible to better control the crystallization temperature, the particle size of the crystals, the particle size distribution, the purity of the end product and, possibly, the yield. The crystals of ATBS.Na have advantageously an X-ray powder diffraction pattern comprising peaks at 11.7°; 12,2°; 13,2°; 13,5°; 15,6°; 16,8°; 17,8°; 18,5°; 19,1°; 20,6°; 21,4°; 23,3°; 25,1°; 25,8°; 26,9°; 29,1°; 29,5°; 31,0°; 33,0°; 33,6°; 34,4°; 35,2°; 35,9°; 37,1°; 38,4°; 39,6°; 41,1°; 42,9°; 45,1°; 46,0°; 47,2°; 47,6° 2-theta angles (+/- 0.1°).

According to one particular embodiment of the invention, the solvent distilled in step 2) may be partially or totally recycled in order to form the aqueous solution or aqueous suspension $SA_2$ of step 1). In other words, the distilled solvent is advantageously at least partially recycled in the aqueous solution or aqueous suspension $SA_2$.

According to another particular embodiment of the invention, the distilled solvent may be partially or totally recycled, generally to wash the crystals of ATBS.Na obtained after step 3) of solid-liquid separation, in an optional step 4), with or without a prior treatment step.

The obtained suspension $S_1$ advantageously comprises between 30 and 90% by weight of crystalline form of ATBS.Na relative to the total weight of the suspension $S_1$, preferably between 50 and 90% by weight, more preferably between 30 and 80% by weight of crystalline form of ATBS.Na and preferably between 50 and 60% by weight.

During step 2), the pH is advantageously greater than 10, preferably greater than 11, more preferably greater than 12, and the pH is even more preferably between 13 and 14.

**Step 3) of the method for producing the crystalline form of the ATBS sodium salt:**

The crystals of ATBS.Na contained in the suspension $S_1$ obtained at the end of step 2) are isolated in a solid-liquid separation step and are in the form of a composition $C_1$.

The solid-liquid separation step can be carried out using various technologies. Examples include, but are not limited to, the use of a centrifuge, a decanter, a filter press, an agitated filter, a belt filter, a disc filter or a rotary drum filter. The solid-liquid separation is preferably carried out using a centrifuge. The solid-liquid separation may also be carried out by gravitational settling.

Step 3) is advantageously carried out at a temperature of between -20 and 40°C, and preferably between -5 and 30°C.

After step 3) of solid-liquid separation, the crystals of ATBS.Na are preferably not dried.

The isolated composition $C_1$ has a content of crystals of ATBS.Na advantageously between 40 and 99%, preferably between 60 and 99% by weight and more preferably between 60 and 98% by weight and even more preferably between 80 and 99%% by weight relative to the weight of the composition $C_1$. The remainder of the composition $C_1$ may be water and/or solubilized ATBS sodium salt, and possibly sodium salt base introduced in step 1).

At the end of this step 3), the crystals are characterized as being crystals of ATBS.Na.

In one particular embodiment, all or part of the liquid phase obtained following the solid-liquid separation is used in the aqueous solution or aqueous suspension $SA_2$ of step 1).

During step 4), the pH is advantageously controlled between 6 and 14, preferably between 8 and 14, more

preferably between 10 and 14, even more preferably between 12 and 14, and even more preferably between 13 and 14.

**Step 4) of the method for producing the crystalline form of the ATBS sodium salt:**

In an optional step 4), the composition $C_1$ containing the crystals obtained at the end of step 3) is washed using a washing solution.

The washing solution may be water, an aqueous solution of sodium salt base (which may or may not be saturated), or a solution (which may or may not be saturated) of ATBS.Na (advantageously in the crystalline form of ATBS.Na), and it is preferably a saturated solution of a sodium salt of ATBS.

Examples of solutions of sodium salt base include a solution of sodium hydroxide, sodium carbonate, sodium bicarbonate or mixtures thereof.

The washing solution may comprise one or more organic solvents.

The quantity of organic solvent may vary as a function of the temperature and the quantity of ATBS.Na or the quantity of sodium salt base.

Advantageously, the washing solution does not comprise organic solvent.

As already indicated in step 1), the organic solvent is advantageously chosen from organic acids, amides, alcohols, ketones, ethers, esters, alkanes, halogenated hydrocarbon compounds, nitriles, or mixtures thereof. The organic solvent is preferably chosen from acrylonitrile, isopropanol, acetic acid or mixtures thereof. More preferably, the organic solvent is acrylonitrile.

In one particular embodiment, the composition $C_1$ obtained at the end of step 3) is washed by spraying washing solution over said composition $C_1$.

In one particular embodiment, the composition $C_1$ obtained at the end of step 3) is washed by placing the composition $C_1$ in suspension in the washing solution.

The weight ratio of the aqueous washing solution to the composition $C_1$ obtained at the end of step 3) is advantageously between 0.05:1 and 10:1 and more preferably between 0.1:1 and 5: 1.

This washing step is advantageously carried out at a temperature of between -5 and 40°C, and preferably between 0 and 30°C. A person skilled in the art knows how to adjust the temperature so as not to solubilize the crystals of ATBS.Na.

The crystals of ATBS.Na obtained at the end of this optional step 4) can be isolated from the washing solution by a solid-liquid separation step, in the form of a composition $C_2$.

The solid-liquid separation step can be carried out using various technologies. Examples include, but are not limited to, the use of a vertical or horizontal centrifuge, a decanter, a filter press, a belt filter, a disc filter, a push filter or a rotary drum filter. The solid-liquid separation may also be carried out by gravitational settling.

In one particular embodiment, all or part of the recovered washing solution may be used again in step 4), with or without a prior treatment step.

In one particular embodiment, all or part of the recovered washing solution may be used in the aqueous solution or aqueous suspension $SA_2$ in step 1), with or without a prior treatment step.

The pH of the washing solution of step 5 is advantageously controlled between 6 and 14, and preferably between 8 and 14.

**Step 5) of the method for producing the crystalline form of the ATBS sodium salt:**

In an optional step 5), the composition $C_1$ obtained at the end of step 3) or the composition $C_2$ obtained at the end of step 4) is dried.

The drying step can be carried out using various technologies. Examples include, but are not limited to, the use of all convection, conduction or radiation drying technologies (fluidized bed dryer, through-bed dryer, drying by conveyor belt, microwave, heated agitated filter, high-frequency radiation, infrared radiation, spraying).

The drying operation may be carried out at atmospheric pressure or else under vacuum.

The drying step may be carried out discontinuously (batch drying) or continuously.

**Other steps of the method for producing the crystalline form of the ATBS sodium salt:**

During the production method, i.e., during steps 1) to 5), and regardless of the step, at least one polymerization inhibitor may be introduced in order to prevent the possible polymerization of the ATBS or its salt. This inhibitor may be chosen, in a non-limiting manner, from hydroquinone, paramethoxyphenol, phenothiazine, 2,2,6,6-tetramethyl(piperidin-1-yl)oxyl, 4-hydroxy-2,2,6,6-tetramethyl(piperidin-1-yl)oxyl, phenylene diamine derivatives, or mixtures thereof.

The inhibitor is preferably paramethoxyphenol or 4-hydroxy-2,2,6,6-tetramethyl(piperidin-1-yl)oxyl.

The quantity of inhibitor that is introduced relative to the quantity of ATBS introduced in step 1) is advantageously

between 0.001% and 5% by weight, and more preferably between 0.01% and 1% by weight.

The inhibitor may be introduced during any one or more of the steps of the method. An additional quantity of it is preferably introduced during step 1). More preferably, the inhibitor is part of the aqueous solution or aqueous suspension $SA_2$ introduced in step 1).

The production method (steps 1) to 5)) may be carried out continuously or discontinuously (batch production).

**Composition of the water-soluble polymer**

The water-soluble polymer is obtained from the crystalline form of ATBS.Na, and advantageously from at least one other monomer which may be chosen from hydrophilic non-ionic monomers and/or hydrophilic anionic monomers and/or hydrophilic cationic monomers and/or hydrophilic zwitterionic monomers and/or hydrophobic monomers and mixtures thereof. It may be a polymer of several distinct monomers or a homopolymer.

Advantageously, the hydrophilic non-ionic monomer or monomers that can be used in the invention are chosen, in particular, from the group comprising water-soluble vinyl monomers such as acrylamide, methacrylamide, N-alkylacrylamides, N-alkylmethacrylamides, N,N-dialkyl acrylamides (e.g. N,N-dimethylacrylamide or N,N-diethylacrylamide), N,N-dialkylmethacrylamides, alkoxylated esters of acrylic acid, N-vinylpyrrolidone, N-methylol(meth)acrylamide, N-vinyl caprolactam, N-vinylformamide (NVF), N-vinyl acetamide, N-vinyl imidazole, N-vinyl succinimide, acryloyl morpholine (ACMO), glycidyl methacrylate, vinyl acetate, glyceryl methacrylate, diacetone acrylamide, methacrylic any hydride, acrylonitrile, maleic anydride, itaconamide, hydroxyalkyl (meth)acrylate, thioalkyl (meth)acrylate, isoprenol and its alkoxylated derivatives, hydroxyethyl (meth)acrylates and their alkoxylated derivatives, hydroxypropylacrylate and its alkoxylated derivatives, and mixtures thereof. Among non-ionic monomers, the alkyl groups are advantageously $C_1$-$C_5$, and more advantageously $C_1$-$C_3$. They are preferably linear alkyls. Preferably, the hydrophilic non-ionic monomer is acrylamide.

The water-soluble polymer advantageously comprises between 1 and 99 mol% hydrophilic of non-ionic monomer(s), preferably between 40 and 95 mol%, more preferably between 45 and 90 mol%.

Advantageously, apart from the ATBS.Na in crystalline form, the hydrophilic anionic monomer or monomers which can be used in the invention can be chosen from a large group. These monomers may have vinyl functions (advantageously acrylic, maleic, fumaric, malonic, itaconic, or allylic), and contain a carboxylate, phosphonate, phosphate, sulphate or sulphonate group, or another anionically charged group. Examples of suitable monomers include acrylic acid; methacrylic acid; dimethylacrylic acid; itaconic acid; C1-C3 hemiesters of itaconic acid; acryloyl chloride; crotonic acid; maleic acid; fumaric acid; 3-acrylamido-3-methylbutanoic acid; strong acid monomers with, for example, a sulfonic acid or phosphonic acid function, such as vinylsulfonic acid, vinylphosphonic acid, allylsulfonic acid, methallylsulfonic acid, 2-methylidenepropane-1,3-disulfonic acid, 2-sulfoethylmethacrylate, sulfopropylmethacrylate, sulfopropylacrylate, allylphosphonic acid, ethylene glycol methacrylate phosphate, 2-acrylamido-2-methylpropane sulfonic acid (ATBS), 2-acrylamido-2-methylpropane disulfonic acid, 3-allyloxy-2-hydroxypropane sulfonic acid, diethylallylphosphonate, carboxyethyl acrylate; water-soluble salts of these monomers such as their alkali metal salts (distinct from the ATBS.Na in crystalline form), alkaline-earth metal salts or ammonium salts; and mixtures thereof. Preferably, the hydrophilic anionic monomer or monomers is acrylic acid and/or its salts.

The water-soluble polymer advantageously comprises between 0.1 and 100 mol% of hydrophilic anionic monomer(s) (distinct from the crystalline form of ATBS.Na), preferably between 1 and 99 mol%, more preferably between 5 and 70 mol%, and even more preferably between 10 and 50 mol%. In this case, these percentages also include the monomer in crystalline form of ATBS.Na.

In one particular embodiment of the invention, the anionic hydrophilic monomer(s), apart from the crystalline form of ATBS.Na, may be salified.

By salified, we mean the substitution of a proton of at least one acid function of the - $R^a$(=O)-OH type (with R representing P, S or C) of the anionic monomer by a metal or ammonium cation to form a salt of the -$R^a$(=O)-OX type (X being a metal cation or an organic cation). In other words, the non-salified form corresponds to the acid form of the monomer, for example $R^b$-C(=O)-OH in the case of the carboxylic acid function, while the salified form of the monomer corresponds to the $R^b$-C(=O)-$O^-$ $X^+$ form, $X^+$ corresponding to an alkaline cation or an organic cation. The salification of the acid functions of the branched water-soluble polymer can be partial or total.

The salified form advantageously corresponds to the salts of alkali metals (Li, Na, K, etc.), alkaline-earth metals (Ca, Mg, etc.) or ammonium (for example the ammonium ion or a tertiary ammonium). The preferred salt is sodium salt.

The salification may take place before, during or after polymerization.

In one particular embodiment of the invention, the water-soluble polymer advantageously comprises between 1 and 100 mol% of anionic monomer(s) in salified form, preferably between 20 and 100 mol%, more preferably between 50 and 100 mol% and even more preferably between 80 and 100 mol%.

Advantageously, the hydrophilic cationic monomer or monomers that can be used in the invention are chosen from monomers derived from vinyl-type units (advantageously acrylamide, acrylic, allylic or maleic), these monomers

having a phosphonium or quaternary ammonium function. Mention may be made, in particular and in non-limiting manner, of diallyldialkyl ammonium salts such as diallyl dimethyl ammonium chloride (DADMAC); acidified or quaternized salts of dialkylaminoalkyl(meth)acrylamides, e.g. methacrylamido-propyl trimethyl ammonium chloride (MAPTAC), acrylamido-propyl trimethyl ammonium chloride (APTAC); acidified or quaternized salts of dialkylaminoalkyl acrylate, such as quaternized or salified dimethylaminoethyl acrylate (DMAEA); acidified or quaternized salts of dialkylaminoalkyl methacrylate, such as quaternized or salified dimethylaminoethyl methacrylate (DMAEMA); acidified or quaternized salts of N,N-dimethylallylamine; acidified or quaternized salts of diallylmethylamine; acidified or quaternized salts of diallylamine; vinylamine obtained by the hydrolysis (basic or acid) of an amide group $-N(R_2)-CO-R_1$ with $R_1$ and $R_2$ being, independently, a hydrogen atom or an alkylated chain of 1 to 6 carbons, for example vinylamine obtained from the hydrolysis of vinylformamide; vinylamine obtained by Hofmann degradation; and mixtures thereof. Advantageously, the alkyl groups are $C_1$-$C_7$, preferably $C_1$-$C_3$, and can be linear, cyclic, saturated or unsaturated chains. Preferably quaternized dimethylaminoethyl acrylate.

A person skilled in the art knows how to prepare quaternized monomers, for example using a quaternizing agent of the R-X type, where R is an alkyl group and X is a halogen or sulfate.

The term "quaternizing agent" refers to a molecule capable of alkylating a tertiary amine.

The quaternizing agent may be chosen from dialkyl sulfates containing from 1 to 6 carbon atoms or alkyl halides containing from 1 to 6 carbon atoms. Preferably, the quaternizing agent is chosen from methyl chloride, benzyl chloride, dimethyl sulfate or diethyl sulfate. In addition, the present invention also covers DADMAC, APTAC and MAPTAC monomers whose counterion is a sulfate, fluoride, bromide or iodide instead of chloride.

The water-soluble polymer advantageously comprises between 0 and 20 mol% of hydrophilic cationic monomer(s), preferably between 0 and 6 mol%.

Advantageously, the hydrophilic zwitterionic monomer or monomers may be a derivative of a vinyl-type unit (advantageously acrylamide, acrylic, allylic or maleic), this monomer having a quaternary amine or ammonium function and a carboxylic (or carboxylate), sulphonic (or sulphonate) or phosphoric (or phosphate) acid function. Mention may be made, in particular and in a non-limiting manner, of dimethylaminoethyl acrylate derivatives, such as 2-((2-(acryloyloxy) ethyl) dimethylammonio) dimethylammonio) ethane-1-sulphonate, 3-((2-(acryloyloxy)ethyl) dimethylammonio) propane-1-sulphonate, 4-((2-(acryloyloxy)ethyl) dimethylammonio) butane-1-sulphonate, [2-(acryloyloxy)ethyl] (dimethylammonio) acetate, dimethylaminoethyl methacrylate derivatives, such as 2-((2-(methacryloyloxy) ethyl) dimethylammonio) ethane-1-sulphonate, 3-((2-(methacryloyloxy) ethyl) dimethylammonio) propane-1-sulphonate, 4-((2-(methacryloyloxy) ethyl) dimethylammonio) butane-1-sulphonate, [2-(methacryloyloxy)ethyl] (dimethylammonio) acetate, dimethylamino propylacrylamide derivatives, such as 2-((3-acrylamidopropyl) dimethylammonio) ethane-1-sulphonate, 3-((3-acrylamidopropyl) dimethylammonio) propane-1-sulphonate, 4-((3-acrylamidopropyl) dimethylammonio) butane-1-sulphonate, [3-(acryloyloxy) propyl] (dimethylammonio) acetate, dimethylamino propyl methylacrylamide derivatives such as 2-((3-methacrylamidopropyl) dimethylammonio) ethane-1-sulphonate, 3-((3-methacrylamidopropyl) dimethylammonio) propane-1-sulphonate, 4-((3-methacrylamidopropyl) dimethylammonio) butane-1-sulphonate and [3-(methacryloyloxy)propyl] (dimethylammonio) acetate and mixtures thereof.

Other hydrophilic zwitterionic monomers can be used, in particular those described by the Applicant in document WO2021/123599.

The water-soluble polymer advantageously comprises between 0 and 20 mol% of hydrophilic zwitterionic monomer(s), more preferably between 0 and 10 mol%.

Hydrophobic monomers with a coefficient partition $K_{ow}$ greater than 1 can also be used in the preparation of the polymer according to the invention. They are preferably chosen from the following list: (meth)acrylic acid esters a (i) $C_4$-$C_{30}$ alkyl, or (ii) arylalkyl ($C_4$-$C_{30}$ alkyl, $C_4$-$C_{30}$ aryl), or (iii) propoxylated, or (iv) ethoxylated, or (v) ethoxylated and propoxylated chain; alkyl aryl sulfonates ($C_4$-$C_{30}$ alkyl, $C_4$-$C_{30}$ aryl) ; mono- or di-substituted (meth)acrylamide amides bearing a (i) $C_4$-$C_{30}$ alkyl, or (ii) arylalkyl ($C_4$-$C_{30}$ alkyl, $C_4$-$C_{30}$ aryl), or (iii) propoxylated, or (iv) ethoxylated, or (v) ethoxylated and propoxylated chain; anionic or cationic monomer derivatives of (meth)acrylamide or (meth)acrylic acid bearing a hydrophobic chain; vinylpyridine and mixtures thereof. The hydrophobic monomers may comprise halogen atoms, for example chlorine.

Among these hydrophobic monomers:

- alkyl groups are preferably $C_4$-$C_{20}$, more preferably $C_4$-$C_8$. The $C_6$-$C_{20}$ alkyls are preferably linear, while the $C_4$-$C_5$ alkyls are preferably branched,
- arylalkyl groups are preferably $C_7$-$C_{25}$, more preferably $C_7$-$C_{15}$,
- the ethoxylated chains advantageously comprise between 1 and 200 $-CH_2-CH_2-O-$groups, preferably between 6 and 100, more preferably between 10 and 40,
- the propoxylated chains advantageously comprise between 1 and 50 $-CH_2-CH_2-CH_2-O-$groups, more preferably between 1 and 20.

Preferred hydrophobic monomers belonging to these classes are, for example:

- n-hexyl (meth)acrylate, n-octyl (meth)acrylate, octyl (meth)acrylamide, lauryl (meth)acrylate, lauryl (meth)acrylamide, myristyl (meth)acrylate, myristyl (meth)acrylamide, pentadecyl (meth)acrylate, pentadecyl (meth)acrylamide, cetyl (meth)acrylate, cetyl (meth)acrylamide, oleyl (meth)acrylate, oleyl (meth)acrylamide, erucyl (meth)acrylate, erucyl (meth)acrylamide, N-tert-Butyl (meth)acrylamide, 2-ethylhexyl acrylate, $C_4$-$C_{22}$ itaconic acid hemiesters, acidified or quaternized salts of $C_4$-$C_{22}$ dialkylaminoalkyl (meth)acrylate, acidified or quaternized salts of $C_4$-$C_{22}$ dialkylaminoalkyl (meth)acrylamides, vinylpyridine, acrylamido undecanoic acid, and mixtures thereof,
- cationic allyl derivatives of formula (I) or (II):

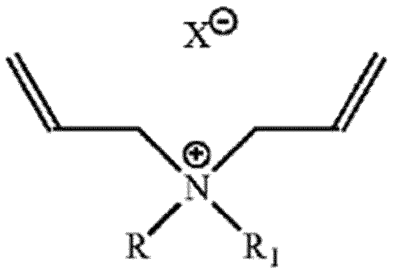

(I)

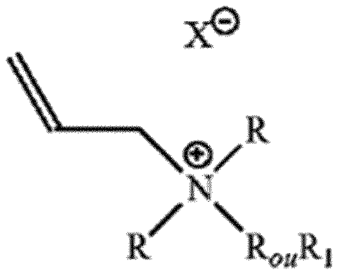

(II)

in which:

R: independently an alkyl chain containing 1 to 4 carbons;
$R_1$: an alkyl or arylalkyl chain containing 8 to 30 carbons;
X: a halide selected from the group consisting of bromides, chlorides, iodides, fluorides and any negatively charged counterion;
and, preferably, hydrophobic cationic derivatives of the (meth)acryloyl type corresponding to formula (III):

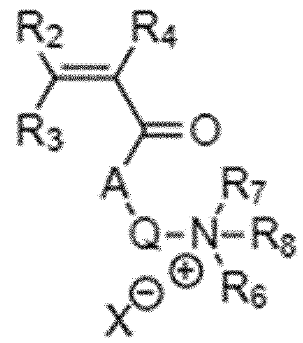

(III)

in which:

- A represents O or N-$R_5$ (preferably A represents N-$R_5$),
- $R_2$, $R_3$, $R_4$, $R_5$, $R_6$, $R_7$: independently hydrogen or an alkyl chain containing 1 to 4 carbons,
- Q: an alkyl chain containing 1 to 20 carbons,
- $R_8$: an alkyl or arylalkyl chain containing 8 to 30 carbons,
- X: a halide selected from the group consisting of bromides, chlorides, iodides, fluorides, and any negatively charged counterion.

The water-soluble polymer advantageously comprises less than 5 mol% of hydrophobic monomers.
When the water-soluble polymer comprises hydrophobic monomers, they are present in an amount such that the polymer remains soluble in water.
Monomers having a fluorescent function can also be used in the invention. A monomer with a fluorescent function may be detected by any suitable method, for example by fluorometry with a fixed wavelength fluorometer. Generally, the

monomer with a fluorescent function is detected at the excitation and emission maxima, which can be determined using a scanning fluorometer.

Monomers with a fluorescent function are chosen, for example, from the following monomers: sodium or potassium styrene sulfonate, styrene sulfonic acid, vinylimidazole and its derivatives, 9-vinyl anthracene and its derivatives, N-9-xanthenylacrylamide and its derivatives, allyl dibenzosuberenol and its derivatives, chinconicin and its derivatives, quininone and its derivatives, cinchoninone and its derivatives, N,N-dimethyl-N-[3-[N'-(4-methoxy naphthalimide)]]propyl-N-(2-hydroxy-3-allyloxy)propyl ammonium hydroxide and mixtures thereof.

Other fluorescent compounds can be used when functionalized with an allyl, vinyl or acrylic double bond, such as pyranine and its derivatives, coumarin and its derivatives, quinolaxine and its derivatives, pinacyanol and its derivatives, xanthydrol and its derivatives, luminol and its derivatives, dabsyl and its derivatives, 3-hydroxy-2-methylene-3-(1-naphthyl)propionic acid and its derivatives, rhodamine and its derivatives, N-dibenzosuberylacrylamide and its derivatives, naphthalic derivatives, fluorescein and its derivatives, pyrene and its derivatives, carbostyril and its derivatives, pyrazoline and its derivatives and mixtures thereof.

In a preferred mode, the polymer does not comprise a monomer with a fluorescent function.

In one particular embodiment according to the invention, the water-soluble polymer may comprise at least one cyclic monomer with a hydrolyzable function. Advantageously, the or the cyclic monomers with a hydrolyzable function are chosen from cyclic ketene acetals, thionolactones and mixtures thereof.

The cyclic ketene acetal is advantageously chosen from: 2-methylene-1,3-dioxepane (MDO), 5,6-benzo-2-methylene-1,3-dioxepane (BMDO), 2-methylene-4-phenyl-1,3-dioxolane (MPDL), 2-methylene-1,3,6-trioxocane (MTC), and mixtures thereof. Preferably, it is 2-methylene-1,3-dioxepane (MDO).

The thionolactone is advantageously chosen from: dibenzo[c,e]oxepine(7H)-5-thione (DOT), ε-thionocaprolactone, 3,3-dimethyl-2,3-dihydro-5H-benzo[e][1,4]dioxepine-5-thione (DBT) and mixtures thereof. Preferably, it is 3,3-dimethyl-2,3-dihydro-5Hbenzo[e][1,4]dioxepine-5-thione.

In particular embodiment in accordance with the invention, the water-soluble polymer may comprise at least one group with an LCST.

According to the general knowledge of a person skilled in the art, a group with an LCST corresponds to a group whose water solubility, for a given concentration, is modified above a certain temperature and as a function of salinity. It is a group with a heating transition temperature that defines its lack of affinity with the solvent medium. The lack of affinity with the solvent results in opacification or loss of transparency, which may be due to precipitation, aggregation, gelation or viscosification of the medium. The minimum transition temperature is known as the LCST (Lower Critical Solution Temperature). For each concentration a group with an LCST, a heating transition temperature is observed. It is higher than the LCST, which is the minimum point on the curve. Below this temperature, the polymer is soluble in water; above this temperature, the polymer loses its solubility in water.

In particular embodiment in accordance with the invention, the water-soluble polymer may comprise at least one group with an UCST.

According to the general knowledge of a person skilled in the art, a group with a UCST corresponds to a group whose water solubility, for a given concentration, is modified below a certain temperature and as a function of salinity. It is a group with a cooling transition temperature that defines its lack of affinity with the solvent medium. The lack of affinity with the solvent results in opacification or loss of transparency, which may be due to precipitation, aggregation, gelation or viscosification of the medium. The maximum transition temperature is known as the UCST (Upper Critical Solution Temperature). For each concentration a group with a UCST, a cooling transition temperature is observed. It is lower than the UCST, which is the maximum point on the curve. Above this temperature, the polymer is soluble in water; below this temperature, the polymer loses its solubility in water.

The quantities of the different monomer(s) will be adjusted by a person skilled in the art in order not to exceed 100 mol% when preparing the water-soluble polymer.

**Water-soluble polymer**

Advantageously, at least 50 mol%, preferably between 70 and 100 mol% of the 2-acrylamido-2-methylpropane acid used to obtain the water-soluble polymer is in the crystalline form of the ATBS sodium salt, prior to polymerization. More preferably, 100 mol% of the ATBS that is used is in the crystalline form of the ATBS sodium salt.

In a preferred embodiment according to the invention, the water-soluble polymer contains only hydrophilic anionic monomers and hydrophilic non-ionic monomers. In other words, it is preferably obtained from at least one hydrophilic anionic monomer and at least one hydrophilic non-ionic monomer.

In a particular embodiment according to the invention, the water-soluble polymer comprises between 0.1 and 100 mol% of ATBS, preferably between 2 and 60 mol%, more preferably between 3 and 50 mol%, advantageously with at least 50 mol% of the ATBS used in the crystalline form of the ATBS sodium salt, preferably between 70 and 100 mol%. More preferably, 100 mol% of the ATBS that is used is in the crystalline form of the ATBS sodium salt.

In a particular embodiment according to the invention, the water-soluble polymer comprises between 1 and 99 mol% of hydrophilic non-ionic monomers, preferably between 40 and 95 mol%, more preferably between 45 and 90 mol%, and between 1 and 99 mol% of ATBS, more preferably between 5 and 70 mol%, more preferably between 3 and 50 mol%, advantageously with at least 50 mol% of the ATBS used being, prior to polymerization, in the crystalline form of the ATBS sodium salt, preferably between 70 and 100 mol%. More preferably, 100 mol% of the ATBS that is used is in the crystalline form of the ATBS sodium salt.

In a preferred embodiment according to the invention, the water-soluble polymer is a ATBS-based polymer, with at least 50 mol% of the ATBS used in the crystalline form of the ATBS sodium salt.

Preferably, the water-soluble polymer is a polymer consisting of acrylamide, acrylic acid and ATBS, with at least 50 mol% of the ATBS used in the crystalline form of the ATBS sodium salt.

The water-soluble polymer may be partially or totally post-hydrolyzed.

According to the invention, the water-soluble polymer may have a linear, branched, crosslinked, star-shaped or comb-shaped structure. This structure can be obtained, according to the general knowledge of a person skilled in the art, for example by selecting the initiator, the transfer agent, the polymerisation technique such as the controlled radical polymerisation called RAFT (Reversible-Addition Fragmentation chain Transfer), NMP (Nitroxide Mediated Polymerisation) or ATRP (Atom Transfer Radical Polymerization), of the incorporation of structural monomers, or of the concentration.

The water-soluble polymer may further by structured by a branching agent. A structured polymer is a non-linear polymer that has side chains such that, when dissolved in water, the polymer has a high degree of entanglement leading to very high low-gradient viscosities.

The branching agent is advantageously chosen from:

- structurial agents, which can be chosen from the group comprising polyethylenically unsaturated monomers (having at least two unsaturated functions), such as vinyl functions, in particular allyl or acrylic functions, for example, methylene bis acrylamide (MBA), triallyamine or tetraallylammonium chloride or 1,2 dihydroxyethylene bis-(N-acrylamide),
- monomers with at least two epoxy functions,
- monomers with at least one unsaturated and one epoxy function,
- macroinitiators such as polyperoxides, polyazoids and transfer agents such as polymercaptant polymers and polyols,
- functionalized polysaccharides,
- water-soluble metal complexes composed of:

  * a metal with a valence greater than 3, such as, by way of example and non-limitation, aluminum, boron, zirconium or titanium, and
  * a ligand bearing a hydroxyl function.

The quantity of branching agent in the water-soluble polymer is advantageously less than 40,000 ppm, relative to the total weight of the monomers of the water-soluble polymer, preferably less than 10,000 ppm, and more preferably less than 5,000 ppm.

In one particular embodiment, the quantity of branching agent is at least equal to 0.1 ppm relative to the total weight of the monomers of the water-soluble polymer, preferably at least 1 ppm.

When the water-soluble polymer comprises a branching agent, the polymer remains soluble in water. A person skilled in the art knows how to adjust the quantity of branching agent and, possibly, the quantity of transfer agent needed to obtain this result.

In a preferred embodiment according to the invention, the water-soluble polymer does not comprise branching agent.

In one particular embodiment according to the invention, the water-soluble polymer comprises a transfer agent.

The transfer agent is advantageously chosen from methanol; isopropyl alcohol; sodium hypophosphite; calcium hypophosphite; magnesium hypophosphite; potassium hypophosphite; ammonium hypophosphite; formic acid; sodium formate; calcium formate; magnesium formate; potassium formate; ammonium formate; 2-mercaptoethanol; 3-mercaptopropanol; dithiopropylene glycol; thioglycerol; thioglycolic acid; thiohydracrylic acid; thiolactic acid; thiomalic acid; cysteine; aminoethanethiol; thioglycolates; allyl phosphites; allyl mercaptans, such as n-dodecyl mercaptan; sodium methallysulfonate; calcium methallysulfonate; magnesium methallysulfonate; potassium methallysulfonate; ammonium methallysulfonate; alkyl phosphites such as trialkyl ($C_{12}$-$C_{15}$) phosphites, dioleyl-hydrogen phosphites, dibutyl phosphite; dialkyldithiophosphates such as dioctyl phosphonate; tertiary nonylmercaptan; 2-ethylhexyl thioglycolate; n-octyl mercaptan; n-dodecyl mercaptan; tertiary-dodecyl mercaptan; iso-octylthioglycolate; 2-ethylhexyl thioglycolate; 2-ethylhexyl mercaptoacetate; polythiols; and mixtures thereof. Preferably the transfer agent is sodium hypophosphite or sodium formate.

The quantity of transfer agent in the water-soluble polymer is advantageously between 0 and 100,000 ppm

relative to the total weight of the monomers of the polymer, preferably between 0 and 10,000 ppm, more preferably between 0 and 1,000 ppm, and even more preferably between 0 and 100 ppm. When it is present, the transfer agent represents at least 0.1 ppm relative to the total weight of the monomers of the water-soluble polymer, and preferably at least 1 ppm.

In one particular embodiment according to the invention, the water-soluble polymer does not comprise transfer agent.

Generally speaking, the water-soluble polymer does not require the development of any particular polymerization method. Indeed, it may be obtained using any of the polymerization techniques that are well known to a person skilled in the art. These include solution polymerization; gel polymerization; precipitation polymerization; emulsion polymerization (aqueous or inverse); suspension polymerization; reactive extrusion polymerization; water-in-water polymerization; or micellar polymerization.

The polymerization is generally radical polymerization, preferably by inverse emulsion polymerization or gel polymerization. Radical polymerization includes free radical polymerization using UV, azo, redox or thermal initiators, as well as controlled radical polymerization (CRP) or matrix polymerization techniques.

Controlled radical polymerization techniques include, but are not limited to, techniques such as Iodine Transfer Polymerization (ITP), Nitroxide Mediated Polymerization (NMP), Atom Transfer Radical Polymerization (ATRP), Reversible Addition Fragmentation chain Transfer (RAFT) Polymerization, which includes MADIX (mAcromolecular Design by Interchange of Xanthates) technology, various variations of Organometallic Mediated Radical Polymerization (OMRP), and OrganoHeteroatom-mediated Radical Polymerization (OHRP).

As already indicated, the water-soluble polymer may be post-hydrolyzed. Post-hydrolysis is the hydrolysis reaction of the polymer after it has been formed by polymerization of the monomer(s). This step consists in reacting hydrolysable functional groups of monomers, advantageously non-ionic functional groups, more advantageously amide or ester functional groups, with a hydrolysis agent. This hydrolysis agent may be an enzyme, an ion-exchange resin, or a Brønsted acid (for example a hydrohalogenic acid) or a Brønsted base (for example an alkali hydroxide or an alkaline-earth hydroxide). Preferably, the hydrolysis agent is a Brønsted base. During this step of post-hydrolyzing the water-soluble polymer, the number of carboxylic acid functions increases. Indeed, the reaction between the base and the amide or ester functions present in the water-soluble polymer produces carboxylate groups.

The water-soluble polymer may be in liquid, gel or solid form when its preparation includes a drying step such as spray drying, drum drying, radiation drying such as microwave drying, or drying in a fluidized bed.

The water-soluble polymer advantageously soluble has a molecular weight of at least 0.5 million g/mol, preferably between 0.5 and 40 million g/mol, more preferably between 5 and 30 million g/mol. Molecular weight is defined as weight-average molecular weight. According to a particular embodiment, the water-soluble polymer may have a molecular weight of between 5,000 and 100,000 g/mol or between 100,000 and 500,000 g/mol.

The molecular weight is determined by the intrinsic viscosity of the polymer. The intrinsic viscosity can be measured by methods known to a person skilled in the art and can be calculated from the reduced viscosity values for different polymer concentrations by a graphical method consisting in plotting the reduced viscosity values (y-axis) against the concentration (x-axis) and extrapolating the curve to zero concentration. The intrinsic viscosity value is plotted on the y-axis or using the least-squares method. The molecular weight can then be determined using the Mark-Houwink equation:

$$[\eta] = K.M^{\alpha}$$

$[\eta]$ represents the intrinsic viscosity of the polymer as determined by the solution viscosity method.
K represents an empirical constant.
M represents the molecular weight of the polymer.
$\alpha$ represents the Mark-Houwink coefficient.
K and $\alpha$ depend on the particular polymer-solvent system.

**Method for treating a suspension of solid particles in water**

The Applicant has surprisingly discovered that using a water-soluble polymer obtained from the crystalline form of ATBS.Na improves the performances of suspension treatments, which include:

- increasing sludge concentration, for instance at the outlet of a thickener,
- the dehydration step and the steps of drying and solidifying the suspensions when they are discharged onto the ground, and
- mechanically treating the treated suspensions.

The invention therefore relates to a method for treating a suspension of solid particles in water, comprising bringing said suspension into contact with at least one water-soluble polymer, said polymer being obtained from the crystalline form of ATBS.Na.

The method of the invention comprises bringing a suspension of solid particles in water into contact with at least one water-soluble polymer, said polymer being prepared from the crystalline form of ATBS.Na having an X-ray powder diffraction pattern comprising peaks at 11.7°; 12.2°; 13.2°; 13.5°; 15.6°; 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6°, 2-theta angles (+/- 0.1°).

This method therefore involves mixing said suspension with the water-soluble polymer.

Such a treatment may be carried out in a thickener, which is a retention zone generally in the form of a section of tube several metres in diameter with a conical bottom in which particles can settle. According to one specific embodiment, the aqueous suspension is transported to a thickener by means of a pipe (pipeline), and the water-soluble polymer is added into the pipe.

In an embodiment, the water-soluble polymer is added into a thickener that already contains the suspension to be treated. In one typical mineral treatment operation, the suspensions are often concentrated in a thickener. This results in a higher density sludge, which exits at the bottom of the thickener, and an aqueous fluid released from the treated suspension (called liquor), which exits by overflow at the top of the thickener. Adding the water-soluble polymer increases the concentration of the sludge and increases the clarity of the liquor.

In an embodiment, the water-soluble polymer is added to the suspension of particles while said suspension is being transported through a pipe to a deposition zone. The water-soluble polymer is preferably added into the pipe which transports said suspension to a deposition zone. The treated suspension is spread over this deposition zone to be dehydrated and solidified. The deposition zones may be unenclosed, being an undefined area of ground, for example, or enclosed, for example being a basin or cell.

One example of these treatments while the suspension is being transported is the spreading of the suspension treated with the water-soluble polymer on the ground in order to dehydrate and solidify it, followed by the spreading of a second layer of treated suspension on the first solidified layer.

Another example is the continuous spreading of the suspension treated with the water-soluble polymer in such a way that the treated suspension falls continuously onto the suspension previously discharged into the deposition zone, thus forming a mass of treated material from which the water is extracted.

In one particular embodiment, the water-soluble polymer is added to the suspension, after which mechanical treatment such as centrifugation, pressing or filtration is carried out.

The water-soluble polymer can be added simultaneously at different stages of the suspension treatment process, i.e., for example, into the pipe (pipeline) transporting the suspension to a thickener and into the slurry leaving the thickener, which will be conveyed either to a deposition zone or to a mechanical treatment device.

The water-soluble polymer may be added in liquid form or in solid form to the aqueous suspension to be treated. It can be added in the form of an emulsion (preferably a water-in-oil emulsion), an aqueous or oily multiphase particulate suspension or a powder. The polymer is preferably added in the form of an aqueous solution obtained from a concentrated form of the polymer such as a powder, a water-in-oil emulsion or an aqueous or oily multiphase particulate suspension.

In one particular embodiment, the aqueous multiphase particulate suspension preferably comprises:

- 15 to 60% by mass of at least one water-soluble polymer in the form of solid particles with an average size of between 5 and 500 μm;
- 15 to 45% by mass of at least one alkali metal salt and/or at least one alkaline-earth metal salt;
- at least one viscosifying agent other than the water-soluble polymer;
- at least 10 % by mass of water; and

said suspension having a Brookfield viscosity of between 500 and 20,000 cps at a temperature of 20°C; and said suspension having a density of between 1.1 and 2 $kg.L^{-1}$.

In one particular embodiment, the oily multiphase particulate suspension preferably comprises:

- 15 to 60% by mass of at least one water-soluble polymer in the form of solid particles with an average size of between 5 and 500 μm;
- at least one viscosifying agent other than the water-soluble polymer;
- at least 10% by mass of oil; and

said suspension having a Brookfield viscosity of between 500 and 20,000 cps at a temperature of 20°C; and said suspension having a density of between 0.6 and 1.4 $kg.L^{-1}$.

Brookfield viscosity is measured with a Brookfield apparatus, fitted with an LV module, the module being able to rotate at a speed of 30 rpm, for example, the measurement being advantageously carried out at 20°C. The density is measured at 20°C, at a pressure of 1 atm, i.e., 101,325 Pa.

When the water-soluble polymer is in solid form, it can be partially or totally dissolved in water using a polymer preparation unit such as the Polymer Slicing Unit (PSU) disclosed in EP 2 203 245.

In one particular embodiment, the water-soluble polymer is added to the suspension in combination with at least one other synthetic or natural polymer. These polymers may be added simultaneously or separately (before or after the water-soluble polymer has been added). The other polymer may be water soluble or water swelling. It may be a dispersant, a coagulant or a flocculant.

In one particular embodiment, the water-soluble polymer is added to the suspension in combination with a salt such as a calcium and/or magnesium salt. The water-soluble polymer and the salt may be added simultaneously or separately. The salts may be inorganic or organic. Suitable salts include calcium chloride, calcium acetate, calcium sulphate, calcium nitrate, calcium hydroxide, calcium carbonate, magnesium chloride, magnesium acetate, magnesium sulphate, magnesium nitrate, magnesium hydroxide, magnesium carbonate, calcium formate, calcium gluconate, calcium propionate, tricalcium phosphate and calcium succinate.

The quantity of water-soluble polymer added to the aqueous suspension is advantageously between 50 and 5,000 g per tonne of solid particles, by dry weight, of the suspension, preferably between 250 and 2000 g/t, and more preferably between 500 and 1500 g/t. The quantity depends on the nature and the composition of the suspensions to be treated. A person skilled in the art knows how to adjust this quantity and would consider such an adjustment to be a matter of routine.

According to the invention, the method can be used to effectively treat a suspension of solid particles and, more particularly, mineral particles.

The suspensions of solid particles in water comprise all types of sludge, residues or waste materials. The suspensions result, more particularly, from mineral extraction and are in the form of mineral particle suspensions. They may, for example, be industrial sludges or residues and all the washing and waste products from mining operations, such as coal mines, diamond mines, phosphate mines, metal mines (aluminium, platinum, iron, gold, copper, silver, etc.). The suspensions can also come from the extraction of oil sand, for example sludge or extraction residues derived from the processing of oil sand. These suspensions generally comprise organic and/or mineral particles, such as clays, sediments, sand, metal oxides, oil, etc., for example, mixed with water.

Generally, the suspensions of solid particles are concentrated and contain between 5% and 60% by weight of solid particles, and preferably between 20 and 50% by weight of solid particles, relative to the total weight of said suspensions.

The method according to the invention may also be useful for treating residues from oil sand extraction, which are referred to as "fines" or "fine tailings", i.e., containing a large quantity of clays, and for treating fine residues known as Mature Fine Tailings (MFT), i.e., these same fine residues after a few years of sedimentation, and containing an even greater quantity of clays. The method according to the invention may also be used to treat so-called "fresh" residues, i.e., those resulting directly from the operation of separating bitumen from the soil from which it (the bitumen) is extracted.

**Method for flocculating a suspension of solid particles in water**

Also disclosed (but not claimed) is a method for flocculating a suspension of solid particles in water, comprising bringing said suspension into contact with at least one water-soluble polymer obtained from the crystalline form of ATBS.Na having an X-ray powder diffraction pattern comprising peaks at 11.7°; 12.2°; 13.2°; 13.5°; 15.6°; 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6° 2-theta (+/-47.6°).

All of the embodiments described above concerning the method for treating a suspension of solid particles in water are also applicable to the method for flocculating a suspension of solid particles in water.

The following examples are given solely by way of illustration of the subject matter of the invention, without limiting it in any way.

**Description of the Figures**

Figure 1 shows the proton NMR spectrum of 2-acrylamido-2-methylpropanesulphonic acid (ATBS) needle-shape crystals obtained according to Example 1.

Figure 2 shows the proton NMR spectrum of crystals of 2-acrylamido-2-methylpropanesulphonic acid sodium salt

(ATBS.Na) obtained according to Example 2a.

Figure 3 shows the X-ray diffraction pattern of the ATBS crystals obtained according to example 1.

Figure 4 shows the X-ray diffraction pattern of the ATBS.Na crystals obtained according to example 2a.

Figure 5 shows the Fourier-transform infrared spectrum of the ATBS crystals obtained in example 1.

Figure 6 shows the Fourier-transform infrared spectrum of the ATBS.Na crystals obtained in example 2a.

Figure 7 shows the thermogram of the ATBS crystals obtained according to example 1.

Figure 8 shows the thermogram of the ATBS.Na crystals obtained according to example 2a.

Figure 9 shows an optical microscope view of the ATBS crystals obtained according to example 1.

Figure 10 shows an optical microscope view of the ATBS.Na crystals obtained according to example 2a.

Figure 11 shows an optical microscope view of the ATBS.Na crystals obtained according to example 2b.

Figure 12 shows an optical microscope view of the ATBS.Na crystals obtained according to example 2c.

Figure 13 shows a photo of the ATBS.Na product obtained in solution according to comparative example 2b.

Figure 14 shows an optical microscope view of the crystals obtained according to comparative example 2c.

Figure 15 shows an optical microscope view of the crystals obtained according to comparative example 2d.

Figure 16 shows an optical microscope view of the crystals obtained according to comparative example 2e.

## EXAMPLES

### Example 1: Synthesis of 2-acrylamido-2-methylpropanesulphonic acid E1 (ATBS)

1522 g of acrylonitrile containing 0.4% water by weight and 180 g of fuming sulphuric acid at 104% $H_2SO_4$ (18% oleum) are added to a stirred 2000 ml reactor with a double jacket. The mixture is stirred for 1 h and cooled by the reactor jacket, which maintains the temperature of the sulphonating mixture at -20°C.
97 g of isobutylene were added to the previous sulphonating mixture at a rate of 1.6 g/min.
The temperature of the mixture was controlled at 45°C when the isobutylene was introduced. The particles of 2-acrylamido-2-methylpropane sulphonic acid precipitated out of the mixture and the solids content was approximately 20% by weight. The reaction mixture was filtered through a Büchner-type filter and dried under vacuum at 50°C. The solid obtained is 2-acrylamido-2-methylpropane sulphonic acid in the form of a very fine white powder.
Optical microscope observations (Figure 9) show that the crystals of ATBS have a needle-shape morphology.

### Example 2a: Formation of the crystalline form of the sodium salt of 2-acrylamido-2-methylpropanesulphonic acid (ATBS.Na) E2a according to the invention

439 g of a 22% (by weight in water) sodium hydroxide solution are added to a stirred, double-jacketed 1000 ml reactor. 452 g of ATBS of example 1 are added to the previous mixture.
The mixture is stirred for 30 min, at 10°C, to form an aqueous solution $SA_2$.
The aqueous solution $SA_2$ is heated to a temperature of 40°C under a vacuum of 50 mbar, for 20 min, then the temperature is maintained for 30 min under a vacuum of 50 mbar and cooled to a temperature of 10°C. The cooling time between 40°C and 10°C is 6 h. A suspension $S_1$ of crystals of the sodium salt of 2-acrylamido-2-methylpropanesulphonic acid is obtained. The suspension $S_1$ is filtered on a Robatel vertical centrifuge. A solid of composition $C_1$ is obtained, containing 80% by weight of crystals of the ATBS.Na **E2a.**
Optical microscope observations (Figure 10) show that the crystals of ATBS.Na **E2a** have a columnar and platelet morphology.
The crystals **E2a** present a X-ray diffraction pattern with the following characteristic peaks:

11,70° ; 12,20° ; 13,2° ; 13,5° ; 15,60° ; 16,80° ; 17,80° ; 18,5° ; 19,1° ; 20,6° ; 21,40° ; 23,3° ; 25,1° ; 25,8° ; 26,9° ; 29,10° ; 29,50° ; 31.0° ; 33° ; 33.6° ; 34.4° ; 35.2° ; 35.9° ; 37.1° ; 38.4°; 39.6°; 41.10°; 42.90°; 45.10°; 46.0°; 47.2°; 47.6° degrees 2-theta (+/- 0. 1°).

**Example 2b: Formation of the crystalline form of the ATBS.Na according to the invention**

Crystals of ATBS.Na are prepared according to the procedure described in Example 2a except that $SA_2$ is distilled under 700 mbar.

Optical microscope observations (Figure 11) show that the crystals obtained in these conditions are identical to the crystals of ATBS.Na prepared in example 2a.

**Example 2c: Formation of the crystalline form of the ATBS.Na according to the invention**

Crystals of ATBS.Na are prepared according to the procedure described in Example 2a except that the cooling time is reduced to 3h45.

Optical microscope observations (Figure 12) show that the crystals obtained in these conditions are identical to the crystals of ATBS.Na prepared in example 2a.

**Comparative example 2a: Preparation of crystals of ATBS.Na under atmospheric pressure (1 bar) (not obtained)**

The reaction is carried out according to the procedure described in Example 2a except that $SA_2$ is distilled under atmospheric pressure.

At the end of the cooling step, the aqueous solution $SA_2$ does not allow the formation of a suspension $S_1$, and no filtration or centrifuging operation can be carried out to isolate crystals of ATBS sodium salt.

**Comparative example 2b: Preparation of crystals of ATBS.Na (not obtained)**

The reaction was carried out according to the conditions described in example 27 of patent application US6331647.

124 g of sodium hydroxide and 0.13 g of hydroquinone monomethyl ether are added to a stirred, double-jacketed 5 000 ml reactor with 400 g of water. The medium is stirred until all the sodium hydroxide is dissolved.

632 g of ATBS of example 1 are added to the previous mixture. The mixture is stirred for 30 min, at 10°C, to form an aqueous solution of sodium salt of 2-acrylamido-2-methylpropanesulfonate.

The aqueous solution obtained is filtered in a 3 000 ml reactor equipped for distillation and containing an air purge tube. The content is heated and stirred while air is blown belon the surface at 0.5 cubic feet per h. The content is heated to 50°C while under a vacuum of 933 mbar (~700 mmHg). As the water is removed, a yellowish honeylike product forms. The product is then transfer to a Robatel vertical centrifuge, but no solid is recovered.

No optical microscope observation was possible as no solid was obtained (Figure 13).

**Comparative example 2c: Preparation of ATBS.Na CE2c**

The reaction was carried out according to the conditions described in example 3 of patent application WO2013079507.

100 g of a ATBS.Na solution (16.77% by weight) is obtained according to example 1 of WO2013079507.

50 g of solvent are removed from the ATBS.Na solution at room temperature under reduced pressure while introducing air into the ATBS.Na solution.

A solid of ATBS.Na **CE2c** is formed and is filtered and washed with acrylonitrile/methanol and then dried at 50°C overnight.

Optical microscope observation (Figure 15) shows that the dried solid of ATBS.Na **CE2c** does not correspond to the crystals of ATBS.Na according to the invention.

**Comparative example 2d: Preparation of crystals ATBS.Na CE2d**

The reaction is carried out according to the procedure described in Example 2a except that $SA_2$ is distilled under 720 mbar.

A solid of composition C1 is obtained, containing 80% by weight of crystals of the ATBS.Na **CE2d.**

Optical microscope observations (Figure 15) show that the crystals of ATBS.Na **CE2d** does not correspond to the

crystals of ATBS.Na according to the invention.

**Comparative example 2e: Preparation of crystals of ATBS.Na CE2e**

The reaction is carried out according to the procedure described in Example 2a except that the cooling time is 3h20.

A solid of composition $C_1$ is obtained, containing 80% by weight of crystals of the ATBS.Na **CE2e.**

Optical microscope observations (Figure 16) show that the crystals of ATBS.Na **CE2e** does not correspond to the crystals of ATBS.Na according to the invention.

**Example 3: NMR analysis of ATBS and ATBS.Na E2a**

ATBS and ATBS.Na **E2a** are analyzed by proton nuclear magnetic resonance (NMR).

The samples are dissolved in $D_2O$. The NMR machine is a Bruker model with a frequency of 400 MHz and is fitted with a 5 mm BBO BB-$^1$H.

The two proton spectra (Figures 1 and 2) are similar and the peak assignments are consistent with the molecular structure of ATBS or its sodium salt.

**Example 4: Analysis by X-ray diffraction of ATBS and ATBS.Na E2a**

ATBS and ATBS.Na **E2a** are ground beforehand to form powders and are analysed by X-ray diffraction over an angular range of 10 to 90°. The equipment used is a Rigaku MiniFlex II diffractometer equipped with a copper source.

Crystals of ATBS.Na **E2a** (Figure 4) present an X-ray diffraction pattern with the following characteristic peaks: 11.7°; 12.2°; 13.2°; 13.5°; 15.6°; 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6° 2-theta angles (+/- 0.1°).

The X-ray diffraction pattern of ATBS of example 1 (Figure 3) does not have the same peaks.

**Example 5: Fourier-transform infrared measurement of ATBS and ATBS.Na E2a**

The equipment used for the Fourier transform infrared measurement is the Perkin Elmer Spectrum 100 fitted with a single reflection ATR polarization accessory, with an accuracy of 8 $cm^{-1}$.

ATBS and ATBS.Na **E2a** are sieved to 100 μm. The particles remaining on the sieve are dried and placed in an oven at 60°C for at least 4 h.

A few hundred milligrams of solid are placed on the diamond of the ATR accessory and pressure is applied manually using the accessory.

The following bands (Figure 6) are characteristic of the crystalline form of the ATBS.Na **E2a:**
3576$cm^{-1}$, 3485 $cm^{-1}$, 3310 $cm^{-1}$, 3079 $cm^{-1}$, 2975 $cm^{-1}$, 1658 $cm^{-1}$, 1629 $cm^{-1}$, 1543 $cm^{-1}$, 1403 $cm^{-1}$, 1321 $cm^{-1}$, 1301 $cm^{-1}$, 1205 $cm^{-1}$, 1187 $cm^{-1}$, 1163 $cm^{-1}$, 1046 $cm^{-1}$, 980 $cm^{-1}$, 629 $cm^{-1}$.

The infrared spectrum of ATBS of example 1 (Figure 5) does not have the same peaks.

**Example 6: Differential Scanning Calorimetry (DSC) of ATBS and ATBS.Na E2a**

The equipment used is a Mettler DSC 3.

ATBS and ATBS.Na **E2a** are analyzed with a heating ramp of 10°C/min under a flow of nitrogen. The initial temperature is 30°C, and the product is heated to 350°C.

The thermogram of ATBS of example 1 (Figure 7) shows a thermal effect at a temperature of 195.15°C, which is generally considered to be the melting/degradation point of ATBS, followed by two exothermic degradation phenomena at 212.8°C and 288.4°C.

The thermogram of the crystals of ATBS.Na **E2a** (Figure 8) shows 4 thermal phenomena at 49.8°C; 144.8°C; 169.8°C; and 254.3°C.

**Example 7: Synthesis of polymers of ATBS and ATBS.Na**

Water-soluble polymers of different monomer compositions are obtained by reaction in a 1.5 L reactor equipped with a mechanical stirrer, a thermometer and a nitrogen inlet. The monomers are introduced into the reactor in the presence of distilled water. [When ATBS (example 1) is used, an appropriate quantity of sodium hydroxide is added to neutralise exactly 100% of the acid monomers (ATBS).] The total concentration of monomers in the reaction mixture is 25% by weight.

The previously prepared ATBS and ATBS.Na crystals are used.

The resulting mixture is homogenised, then cooled and degassed under a stream of nitrogen. Polymerisation is then initiated using a sodium hypophosphite and tert-butyl hydroperoxide redox system. The resulting gel obtained after polymerisation is then ground and dried in a drying oven to obtain a polymer as a powder.

The various polymers obtained are all water-soluble polymers with a high molecular weight of between 10 and 12 million g/mol and their compositions are presented in Table 1.

Table 1: Compositions of polymers PB1 to PB6 of the invention and comparative example polymers PA$_{a-f}$1 and PA$_{a-f}$2c-e; inv = invention and CE = comparative example; AM = acrylamide; AA = acrylic acid; DADMAC = Diallyldimethylammonium chloride; DMEA = 2-Dimethylaminoethyl acrylate.

| **Polymer** | **ATBS used** | **Polymer composition (mol%)** | | | | |
|---|---|---|---|---|---|---|
| | | AM | AA | ATBS | DADMAC | DMEA |
| **PA$_a$1 (CE)** | ATBS **E1** | 70 | - | 30 | - | - |
| **PB1 (inv)** | ATBS.Na **E2a** | 70 | - | 30 | - | - |
| **PA2c (CE)** | ATBS.Na **CE2c** | 70 | - | 30 | - | - |
| **PA2d (CE)** | ATBS.Na **CE2d** | 70 | - | 30 | - | - |
| **PA2e (CE)** | ATBS.Na **CE2e** | 70 | - | 30 | - | - |
| **PA$_a$1** (CE) | ATBS **E1** | - | - | 100 | - | - |
| **PB2 (inv)** | ATBS.Na **E2a** | - | - | 100 | - | - |
| **PA$_b$2c (CE)** | ATBS.Na **CE2c** | - | - | 100 | - | - |
| **PA$_b$2d (CE)** | ATBS.Na **CE2d** | - | - | 100 | - | - |
| **PA$_b$2e (CE)** | ATBS.Na **CE2e** | - | - | 100 | - | - |
| **PA$_c$1 (CE)** | ATBS **E1** | 75 | 10 | 15 | - | - |
| **PB3 (inv)** | ATBS.Na **E2a** | 75 | 10 | 15 | - | - |
| **PA$_c$2c (CE)** | ATBS.Na **CE2c** | 75 | 10 | 15 | - | - |
| **PA$_c$2d (CE)** | ATBS.Na **CE2d** | 75 | 10 | 15 | - | - |
| **PA$_c$2$_e$ (CE)** | ATBS.Na **CE2e** | 75 | 10 | 15 | - | - |
| **PA$_d$1(CE)** | ATBS **E1** | 60 | - | 35 | - | 5 |
| **PB4 (inv)** | ATBS.Na **E2a** | 60 | - | 35 | - | 5 |
| **PA$_d$2c (CE)** | ATBS.Na **CE2c** | 60 | - | 35 | - | 5 |
| **PA$_d$2d (CE)** | ATBS.Na **CE2d** | 60 | - | 35 | - | 5 |
| **PA$_d$2e (CE)** | ATBS.Na **CE2e** | 60 | - | 35 | - | 5 |
| **PA$_e$1(CE)** | ATBS **E1** | 75 | - | 20 | 5 | - |
| **PB5 (inv)** | ATBS.Na **E2a** | 75 | - | 20 | 5 | - |
| **PA$_e$2c (CE)** | ATBS.Na **CE2c** | 75 | - | 20 | 5 | - |
| **PA$_e$2d (CE)** | ATBS.Na **CE2d** | 75 | - | 20 | 5 | - |
| **PA$_e$2e (CE)** | ATBS.Na **CE2e** | 75 | - | 20 | 5 | - |
| **PA$_f$1(CE)** | ATBS **E1** | 35 | - | 65 | - | - |
| **PB6 (inv)** | ATBS.Na **E2a** | 35 | - | 65 | - | - |
| **PA$_f$2c (CE)** | ATBS.Na **CE2c** | 35 | - | 65 | - | - |
| **PA$_f$2d (CE)** | ATBS.Na **CE2d** | 35 | - | 65 | - | - |
| **PA$_f$2e (CE)** | ATBS.Na **CE2e** | 35 | - | 65 | - | - |
| **PA$_f$1(CE)** | ATBS **E1** | 35 | - | 65 | - | - |

The polymers are dissolved in tap water to obtain aqueous solutions with a concentration of 0.4% by weight of polymer relative to the total weight of the solution. The solutions are mechanically stirred at 500 rpm until the polymers are completely solubilised and clear, homogeneous solutions are obtained.

**Example 8: Treatment of a coal mining effluent**

A series of flocculation tests is carried out on a coal mine effluent with a solids content of 18.2% by weight.
A quantity of each solution, corresponding to a polymer dosage of 280 g of polymer per tonne of mine effluent dry matter, is added to 200 g of mine effluent and complete mixing is then carried out manually until flocculation and optimum water release are observed.
The result is expressed as the NWR (Net Water Release), which corresponds to the total quantity of water recovered 1 h after the flocculation test minus the quantity of water induced during incorporation of the aqueous polymer solution into the suspension. The same NWR is calculated after 24 h, which gives a good idea of the maximum release of water.
The results are presented in Table 2.

Table 2: Net Water Release results using polymer **PB1** to **PB5** of the invention and comparative example polymers **$PA_{a-e}$1** and **$PA_{a-e}$2c-e**.

| **Polymer** | **NWR (mL)** | |
|---|---|---|
| | 1 h | 24 h |
| **$PA_a$1 (CE)** | 59 | 70 |
| **PB (inv)** | 83 | 90 |
| **PA2c (CE)** | 60 | 70 |
| **PA2d (CE)** | 62 | 69 |
| **PA2e (CE)** | 59 | 68 |
| **$PA_a$1 (CE)** | 64 | 72 |
| **PB2 (inv)** | 85 | 94 |
| **$PA_b$2c (CE)** | 62 | 73 |
| **$PA_b$2d (CE)** | 63 | 74 |
| **$PA_b$2e (CE)** | 64 | 72 |
| **$PA_c$1 (CE)** | 57 | 66 |
| **PB3 (inv)** | 80 | 88 |
| **$PA_c$2c (CE)** | 56 | 65 |
| **$PA_c$2d (CE)** | 55 | 66 |
| **$PA_c2_e$ (CE)** | 57 | 67 |
| **$PA_d$1(CE)** | 51 | 61 |
| **PB4 (inv)** | 74 | 82 |
| **$PA_d$2c (CE)** | 49 | 60 |
| **$PA_d$2d (CE)** | 50 | 62 |
| **$PA_d$2e (CE)** | 48 | 61 |
| **$PA_e$1(CE)** | 53 | 64 |
| **PB5 (inv)** | 77 | 85 |
| **$PA_e$2c (CE)** | 52 | 64 |
| **$PA_e$2d (CE)** | 51 | 66 |
| **$PA_e$2e (CE)** | 52 | 63 |

The results of this experiment clearly show that the use of ATBS sodium salt in the crystalline form according to the invention provides a more effective polymer for flocculating coal mine effluent.

**Example 9: Treatment of red mud from a Bayer process**

Another series of tests is carried out on red mud from a Bayer process, with a solids content of 22.8% by weight according to the protocol described in Example 26 using 740 g of polymer per ton of red mud dry matter.
The results are presented in Table 3.

Table 3: Net Water Release results using polymer **PB1** to **PB6** of the invention and comparative example polymers **$PA_{a-f}1$** and **$PA_{a-f}2c-e$**

| **Polymer** | **NWR (mL)** | |
|---|---|---|
| | 1 h | 24 h |
| **$PA_a1$ (CE)** | 35 | 39 |
| **PB1 (inv)** | 48 | 57 |
| **PA2c (CE)** | 34 | 40 |
| **PA2d (CE)** | 33 | 38 |
| **PA2e (CE)** | 34 | 37 |
| **$PA_a1$ (CE)** | 34 | 36 |
| **PB2 (inv)** | 50 | 59 |
| **$PA_b2c$ (CE)** | 33 | 37 |
| **$PA_b2d$ (CE)** | 34 | 36 |
| **$PA_b2e$ (CE)** | 32 | 36 |
| **$PA_c1$ (CE)** | 28 | 34 |
| **PB3 (inv)** | 44 | 54 |
| **$PA_c2c$ (CE)** | 27 | 33 |
| **$PA_c2d$ (CE)** | 26 | 31 |
| **$PA_c2_e$ (CE)** | 27 | 32 |
| **$PA_d1$(CE)** | 17 | 25 |
| **PB4 (inv)** | 39 | 49 |
| **$PA_d2c$ (CE)** | 18 | 24 |
| **$PA_d2d$ (CE)** | 16 | 25 |
| **$PA_d2e$ (CE)** | 17 | 26 |
| **$PA_e1$(CE)** | 21 | 28 |
| **PB5 (inv)** | 41 | 47 |
| **$PA_e2c$ (CE)** | 20 | 28 |
| **$PA_e2d$ (CE)** | 22 | 28 |
| **$PA_e2e$ (CE)** | 19 | 27 |
| **$PA_f1$(CE)** | 39 | 43 |
| **PB6 (inv)** | 51 | 60 |
| **$PA_f2c$ (CE)** | 40 | 44 |
| **$PA_f2d$ (CE)** | 40 | 42 |
| **$PA_f2e$ (CE)** | 37 | 40 |

The results of this experiment clearly show that the use of ATBS.Na in the crystalline form of the invention produces a more effective polymer for flocculating red mud from a Bayer process.

## Claims

1. A method for treating a suspension of solid particles in water, comprising

   - polymerizing a crystalline form of 2-acrylamido-2-methylpropanesulfonic acid sodium salt ATBS.Na having an X-ray powder diffraction pattern comprising peaks at 11.7°; 12.2°; 13.2°; 13.5°; 15.6°; 16.8°; 17.8°; 18.5°; 19.1°; 20.6°; 21.4°; 23.3°; 25.1°; 25.8°; 26.9°; 29.1°; 29.5°; 31.0°; 33.0°; 33.6°; 34.4°; 35.2°; 35.9°; 37.1°; 38.4°; 39.6°; 41.1°; 42.9°; 45.1°; 46.0°; 47.2°; 47.6°, 2-theta angles to obtain at least one water-soluble polymer of 2-acrylamido-2-methylpropanesulfonic acid ATBS
   - contacting said suspension with the said at least one water-soluble polymer of 2-acrylamido-2-methylpropanesulfonic acid ATBS.

2. The method according to claim *1,* ***characterized*** **in that** at least 50 mol% of ATBS of the water-soluble polymer is, before polymerization, in the crystalline form of the ATBS.Na.

3. The method according to one of claims 1 or 2, ***characterized*** **in that** the water-soluble polymer is a polymer from the crystalline form of ATBS.Na, and from at least one hydrophilic monomer chosen from: non-ionic monomers, anionic monomers, cationic monomers, zwitterionic monomers and the mixtures thereof

4. The method according to claim 3, ***characterized*** **in that** the non-ionic hydrophilic monomer is chosen from acrylamide, methacrylamide, N-alkylacrylamides, N-alkylmethacrylamides, N,N-dialkyl acrylamides, N,N-dialkylmethacrylamides, alkoxylated esters of acrylic acid, N-vinylpyrrolidone, N-methylol(meth)acrylamide, N-vinyl caprolactam, N-vinylformamide, N-vinyl acetamide, N-vinyl imidazole, N-vinyl succinimide, acryloyl morpholine, glycidyl methacrylate, vinyl acetate, glyceryl methacrylate, diacetone acrylamide, methacrylic anyhydride, acrylonitrile, maleic anydride, itaconamide, hydroxyalkyl (meth)acrylate, thioalkyl (meth)acrylate, isoprenol and its alkoxylated derivatives, hydroxyethyl (meth)acrylates and their alkoxylated derivatives, hydroxypropylacrylate and its alkoxylated derivatives, and mixtures thereof, the alkyl groups are $C_1$-$C_5$.

5. The method according to one of claims 1 to 4, ***characterized*** **in that** the water-soluble polymer comprises between 1 and 99 mol% of non-ionic monomers, and between 1 and 99 mol% of ATBS, with at least 50 mol% of the ATBS being, before polymerization, in the crystalline form of the ATBS.Na.

6. The method according to one of claims 1 to 5, ***characterized*** **in that** the water-soluble polymer is a polymer based on acrylamide and ATBS, at least 50 mol% of the ATBS being, before polymerization, in the crystalline form of the ATBS.Na, or a polymer consisting of acrylamide, acrylic acid and ATBS, at least 50 mol% of the ATBS being, before polymerization, in the crystalline form of the ATBS.Na.

7. The method according to one of claims 1 to 6, ***characterized*** **in that** the water-soluble polymer has an average molecular weight by weight of between 0.5 and 40 million g/mol.

8. The method according to claims 1 to 7, ***characterized*** **in that** the quantity of water-soluble polymer added to the aqueous suspension is between 50 and 5,000 g per tonne of solid particles, by dry weight, of the suspension.

9. The method according to one of claims 1 to 8, ***characterized*** **in that** the aqueous suspension of solid particles originates from the extraction of ores and consists of a suspension of mineral particles.

10. The method according to one of claims 1 to 9, ***characterized*** **in that** the suspension of solid particles contains between 5% and 60% by weight of solid particles.

11. The method according to one of claims 1 to 10, ***characterized*** **in that** the aqueous suspension is transported by means of a pipe to a deposition zone and **in that** the water-soluble polymer is added into said pipe.

## Patentansprüche

1. Verfahren zur Behandlung einer Suspension fester Partikel in Wasser, das Folgendes umfasst:

   - Polymerisation einer kristallinen Form von 2-Acrylamido-2-methylpropansulfonsäure-Natriumsalz (ATBS.Na) mit einem Beugungsmuster der Röntgenpulverdiffraktomie, das Spitzenwerte bei 11,7; 12,2; 13,2 13,5; 15,6; 16,8; 17,8; 18,5; 19,1; 20,6; 21,4; 23,3; 25,1; 25,8; 26,9; 29,1; 29,5; 31,0; 33,0; 33,6; 34,4; 35,2; 35,9; 37,1; 38,4; 39,6; 41,1; 42,9; 45,1; 46,0; 47,2; 47,6, 2-Theta-Winkel aufweist, um mindestens ein wasserlösliches Polymer der 2-Acrylamido-2-methylpropansulfonsäure (ATBS) zu erhalten;
   - Inkontaktbringen der Suspension mit dem mindestens einen wasserlöslichen Polymer der 2-Acrylamido-2-methylpropansulfonsäure (ATBS).

2. Verfahren nach Anspruch 1, ***dadurch gekennzeichnet,*** **dass** mindestens 50 Mol-% ATMS des wasserlöslichen Polymers vor der Polymerisation in kristalliner Form von ATBS.Na vorliegen.

3. Verfahren nach einem der Ansprüche 1 oder 2, ***dadurch gekennzeichnet,*** **dass** das wasserlösliche Polymer ein Polymer aus der kristallinen Form von ATBS.Na und aus mindestens einem hydrophilen Monomer besteht, das ausgewählt ist aus: nichtionischen Monomeren, anionischen Monomeren, kationischen Monomeren, zwitterionischen Monomeren und deren Mischungen.

4. Verfahren nach Anspruch 3, ***dadurch gekennzeichnet,*** **dass** das nichtionische hydrophile Monomer ausgewählt ist aus Acrylamid, Methacrylamid, N-Alkylacrylamiden, N-Alkylmethacrylamiden, N,N-Dialkylacrylamiden, N,N-Dialkylmethacrylamiden, alkoxylierten Estern der Acrylsäure, N-Vinylpyrrolidon, N-Methylol(meth)acrylamid, N-Vinylcaprolactam, N-Vinylformamid, N-Vinylacetamid, N-Vinylimidazol, N-Vinylsuccinimid, Acryloylmorpholin, Glycidylmethacrylat, Vinylacetat, Glycerylmethacrylat, Diacetonacrylamid, Methacrylsäureanhydrid, Acrylnitril, Maleinsäureanhydrid, Itaconamid, Hydroxyalkyl(meth)acrylat, Thioalkyl(meth)acrylat, Isoprenol und dessen alkoxylierten Derivaten, Hydroxyethyl(meth)acrylaten und deren alkoxylierten Derivaten, Hydroxypropylacrylat und dessen alkoxylierten Derivaten sowie Mischungen davon, wobei die Alkylgruppen $C_1$-$C_5$ sind.

5. Verfahren nach einem der Ansprüche 1 bis 4, ***dadurch gekennzeichnet,*** **dass** das wasserlösliche Polymer zwischen 1 und 99 Mol-% nichtionische Monomere und zwischen 1 und 99 Mol-% ATBS umfasst, wobei mindestens 50 Mol-% der ATBS vor der Polymerisation in der kristallinen Form von ATBS.Na vorliegen.

6. Verfahren nach einem der Ansprüche 1 bis *5,* ***dadurch gekennzeichnet,*** **dass** das wasserlösliche Polymer ein Polymer auf Basis von Acrylamid und ATBS ist, wobei mindestens 50 Mol-% der ATBS vor der Polymerisation in der kristallinen Form der ATBS.Na vorliegen, oder ein Polymer, das aus Acrylamid, Acrylsäure und ATBS besteht, wobei mindestens 50 Mol-% der ATBS vor der Polymerisation in der kristallinen Form der ATBS.Na vorliegen.

7. Verfahren nach einem der Ansprüche 1 bis 6, ***dadurch gekennzeichnet,*** **dass** das wasserlösliche Polymer ein durchschnittliches Molekulargewicht von 0,5 bis 40 Millionen g/mol aufweist.

8. Verfahren nach den Ansprüchen 1 bis 7, ***dadurch gekennzeichnet,*** **dass** die Menge des wasserlöslichen Polymers, das der wässrigen Suspension zugesetzt wird, zwischen 50 und 5.000 g pro Tonne Feststoffpartikel, bezogen auf das Trockengewicht der Suspension, beträgt.

9. Verfahren nach einem der Ansprüche 1 bis 8, ***dadurch gekennzeichnet,*** **dass** die wässrige Suspension fester Partikel aus der Erzgewinnung stammt und aus einer Suspension mineralischer Partikel besteht.

10. Verfahren nach einem der Ansprüche 1 bis 9, ***dadurch gekennzeichnet,*** **dass** die Suspension der Feststoffpartikel zwischen 5 und 60 Gew.-% fester Partikel enthält.

11. Verfahren nach einem der Ansprüche 1 bis 10, ***dadurch gekennzeichnet,*** **dass** die wässrige Suspension mittels einer Rohrleitung zu einer Ablagerungszone befördert wird und dass das wasserlösliche Polymer in diese Rohrleitung eingebracht wird.

## Revendications

**1.** Procédé de traitement d'une suspension de particules solides dans l'eau, comprenant

- la polymérisation d'une forme crystalline du sel de sodium de l'acide 2-acrylamido-2-méthylpropane sulfonique ATBS.Na ayant un diagramme de diffraction des rayons X sur poudre comprenant des pics à 11,7° ; 12,2° ; 13,2° ; 13,5° ; 15,6° ; 16,8° ; 17,8° ; 18,5° ; 19,1° ; 20,6° ; 21,4° ; 23,3° ; 25,1° ; 25,8° ; 26,9° ; 29,1° ; 29,5° ; 31,0° ; 33,0° ; 33,6° ; 34,4° ; 35,2° ; 35,9° ; 37,1° ; 38,4° ; 39,6° ; 41,1° ; 42,9° ; 45,1° ; 46,0° ; 47,2° ; 47,6°, degrés 2-thêta pour obtenir au moins un polymère hydrosoluble d'acide 2-acrylamido-2-méthylpropane sulfonique ATBS,
- la mise en contact de ladite suspension avec ledit au moins un polymère hydrosoluble d'acide 2-acrylamido-2-méthylpropane sulfonique ATBS.

**2.** Procédé selon la revendication 1, ***caractérisé* en ce qu'**au moins 50 mol% d'ATBS du polymère hydrosoluble est, avant polymérisation, sous la forme cristalline d'ATBS.Na.

**3.** Procédé selon l'une des revendications 1 ou 2, ***caractérisé* en ce que** le polymère hydrosoluble est un polymère de la forme cristalline d'ATBS.Na, et d'au moins un monomère hydrophile choisi parmi les monomères non ionique, les monomères anioniques, les monomères cationiques, les monomères zwitterioniques et leurs mélanges.

**4.** Procédé selon la revendication 3, ***caractérisé* en ce que** le monomère hydrophile non ionique est choisi parmi l'acrylamide, le méthacrylamide, les N-alkylacrylamides, les N-alkylméthacrylamides, les N,N-dialkyl acrylamides, les N,N-dialkylméthacrylamides, les esters alkoxylés de l'acide acrylique, la N-vinylpyrrolidone, la N-methylol(meth) acrylamide, N-vinyl caprolactam, N-vinylformamide, N-vinyl acetamide, N-vinyl imidazole, N-vinyl succinimide, l'acryloyl morpholine, glycidyl methacrylate, acétate de vinyle, glyceryl methacrylate, diacétone acrylamide, anhydride méthacrylique, acrylonitrile, anhydride maléique, itaconamide, hydroxyalkyl (meth)acrylate, thioalkyl (meth) acrylate, isoprénol et ses dérivés alcoxylés, hydroxyethyl (meth)acrylates et ses dérivés alcoxylés, hydroxypropylacrylate et ses dérivés alcoxylés, et leurs mélanges, les groupes alkyls sont en $C_1$-$C_5$.

**5.** Procédé selon l'une des revendications 1 à 4, ***caractérisé* en ce que** le polymère hydrosoluble comprend entre 1 et 99 mol% de monomères non-ioniques, et entre 1 et 99 mol% d'ATBS, au moins 50 mol% d'ATBS étant, avant polymérisation, sous la forme cristalline d'ATBS.Na.

**6.** Procédé selon l'une des revendications 1 à 5, ***caractérisé* en ce que** le polymère hydrosoluble est un polymère à base d'acrylamide et ATBS, au moins 50 mol% de l'ATBS étant, avant polymérisation, sous la forme cristalline d'ATBS.Na, ou un polymère constitué d'acrylamide, d'acide acrylique et ATBS, au moins 50 mol% de l'acide 2-acrylamido-2-méthylpropane sulfonique étant, avant polymérisation, sous la forme cristalline d'ATBS.Na.

**7.** Procédé selon l'une des revendications 1 à 6, ***caractérisé* en ce que** le polymère hydrosoluble a un poids moléculaire moyen en poids compris entre 0,5 et 40 millions g/mol.

**8.** Procédé selon l'une des revendications 1 à 7, ***caractérisé* en ce que** la quantité de polymère hydrosoluble ajouté dans la suspension aqueuse est comprise entre 50 et 5000 g par tonne de particules solides, en poids sec, de la suspension.

**9.** Procédé selon l'une des revendications 1 à 8, ***caractérisé* en ce que** la suspension aqueuse de particules solides provient de l'extraction de minerais et consiste en une suspension de particules minérales.

**10.** Procédé selon l'une des revendications 1 à 9, ***caractérisé* en ce que** la suspension de particules solides contient entre 5 % et 60 % en poids de particules solides.

**11.** Procédé selon l'une des revendications 1 à 10, ***caractérisé* en ce que** la suspension aqueuse est transportée au moyen d'un tuyau jusque vers une zone de dépôt et **en ce que** le polymère hydrosoluble est ajouté dans ledit tuyau.

[Fig. 1]

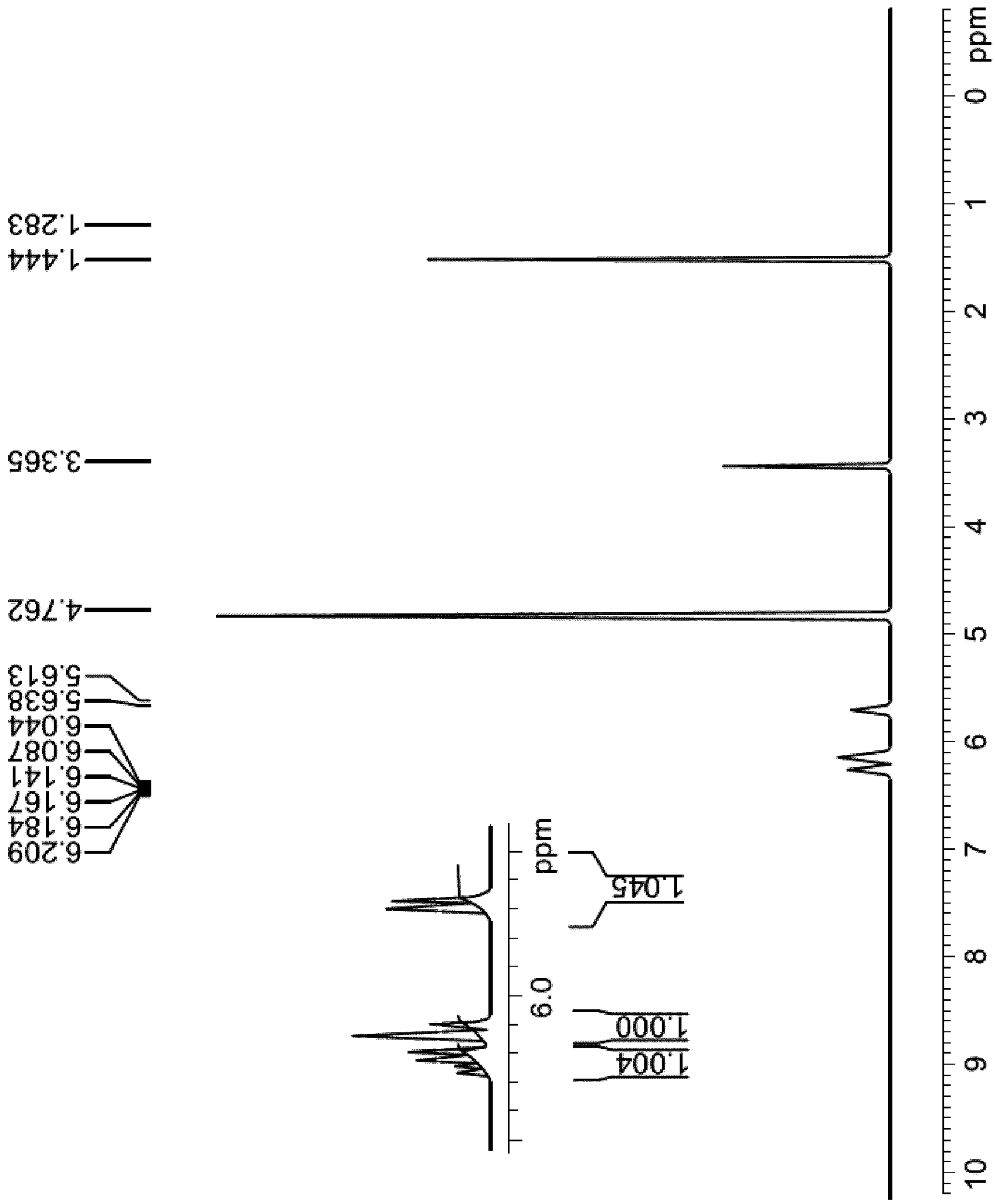
1.283
1.444
3.365
4.762
5.613
5.638
6.044
6.087
6.141
6.167
6.184
6.209
1.045
1.000
1.004
6.0
ppm
0
1
2
3
4
5
6
7
8
9
10
ppm

[Fig. 2]

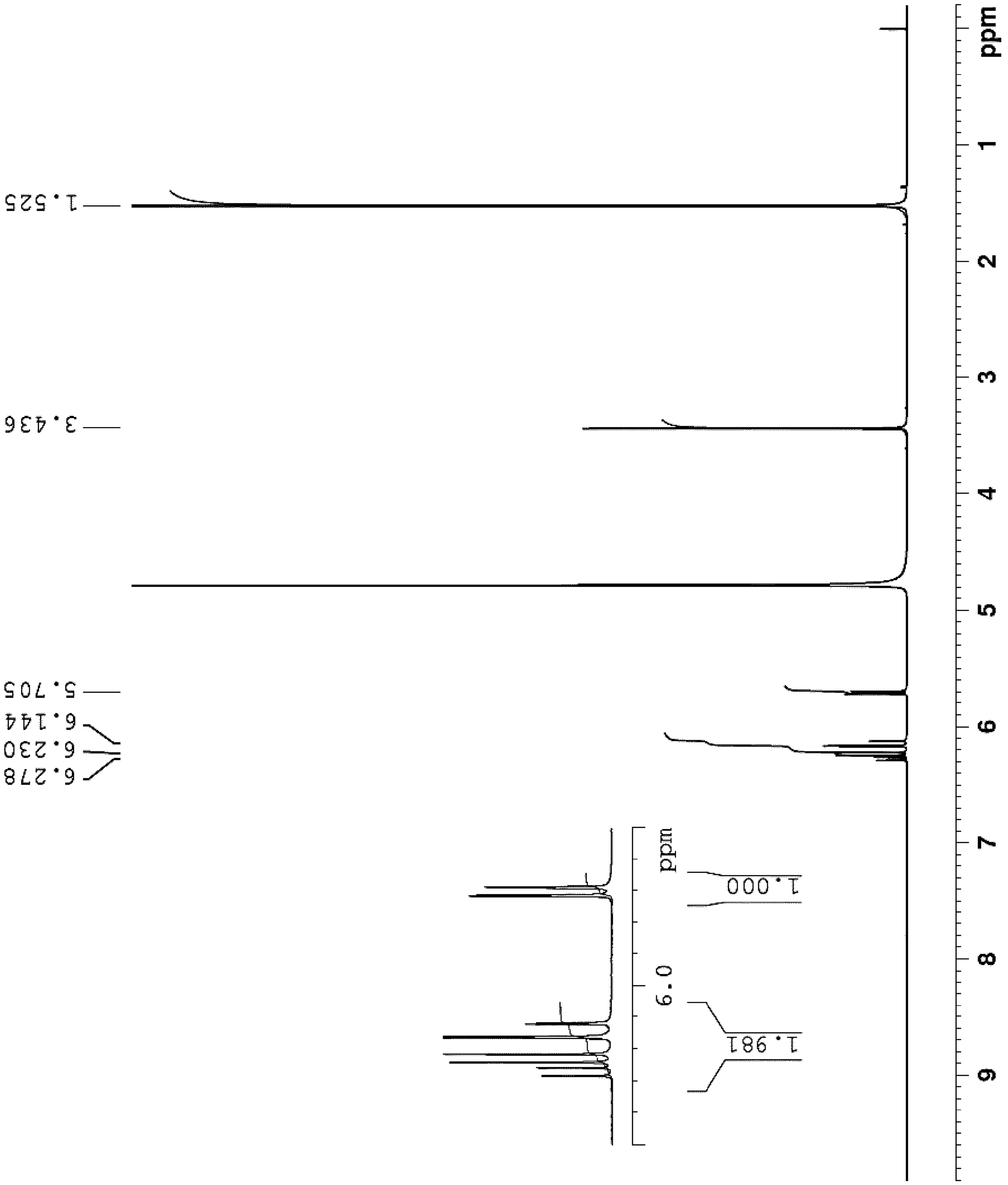

[Fig. 3]

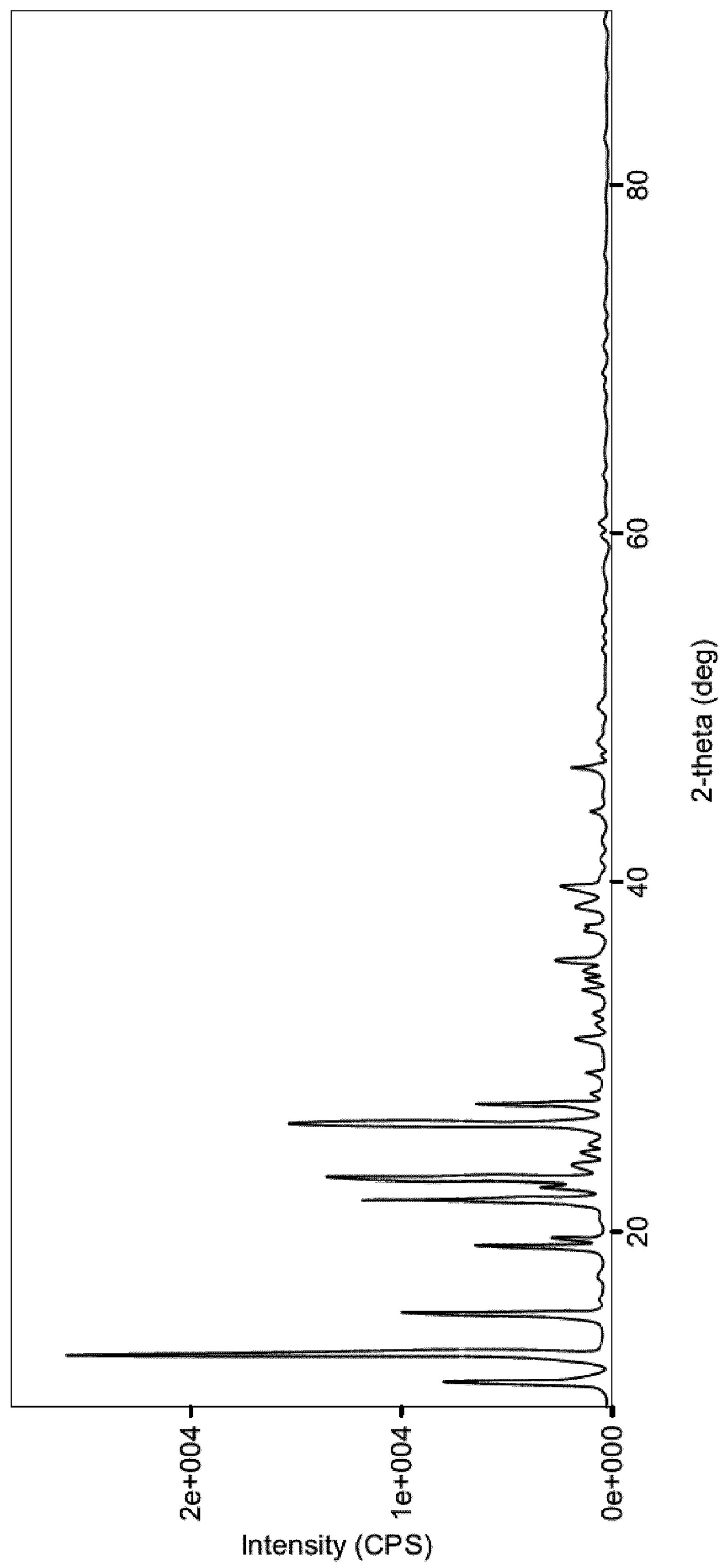

[Fig. 4]

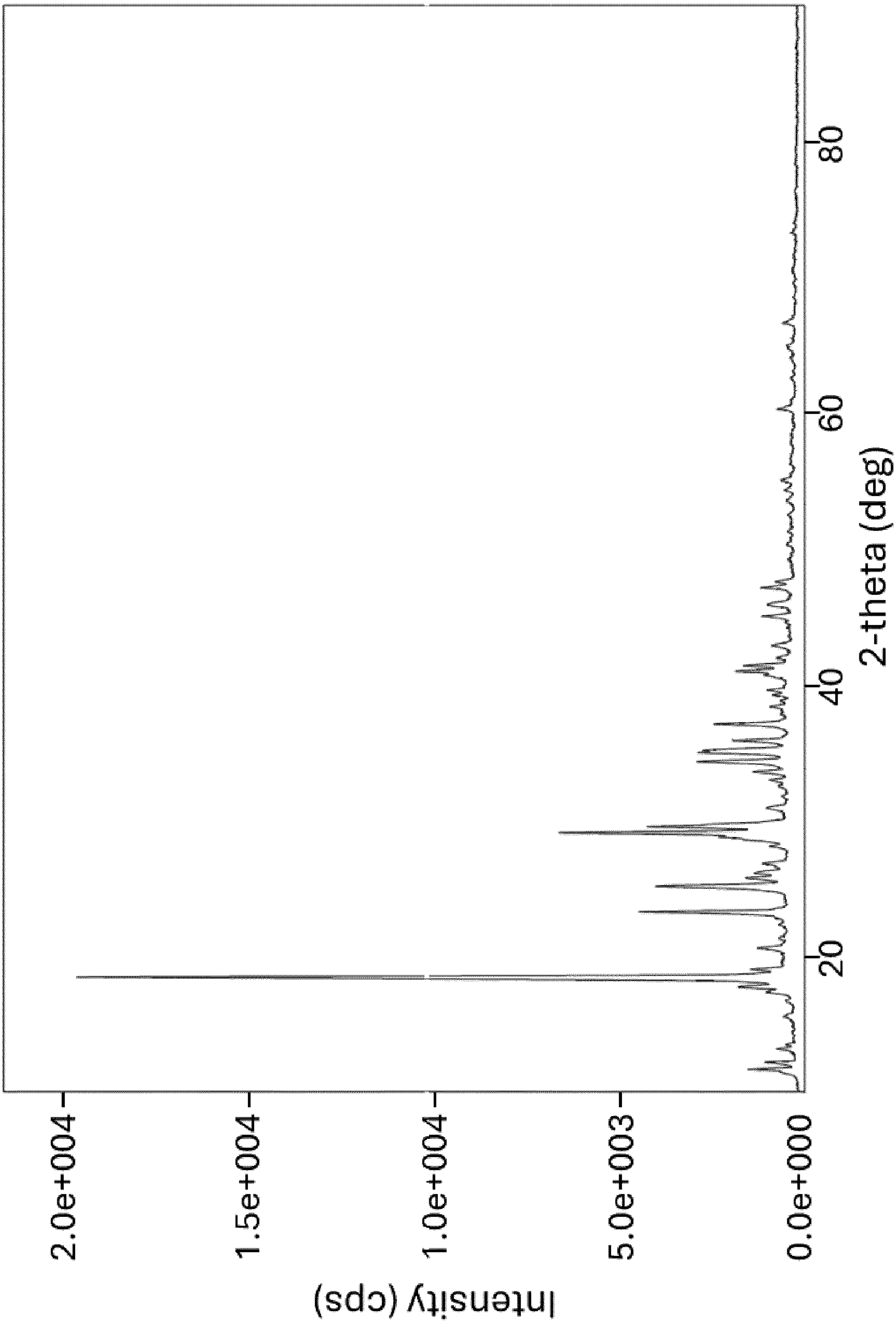
Intensity (cps)
2.0e+004
1.5e+004
1.0e+004
5.0e+003
0.0e+000
20
40
60
80
2-theta (deg)

[Fig. 5]

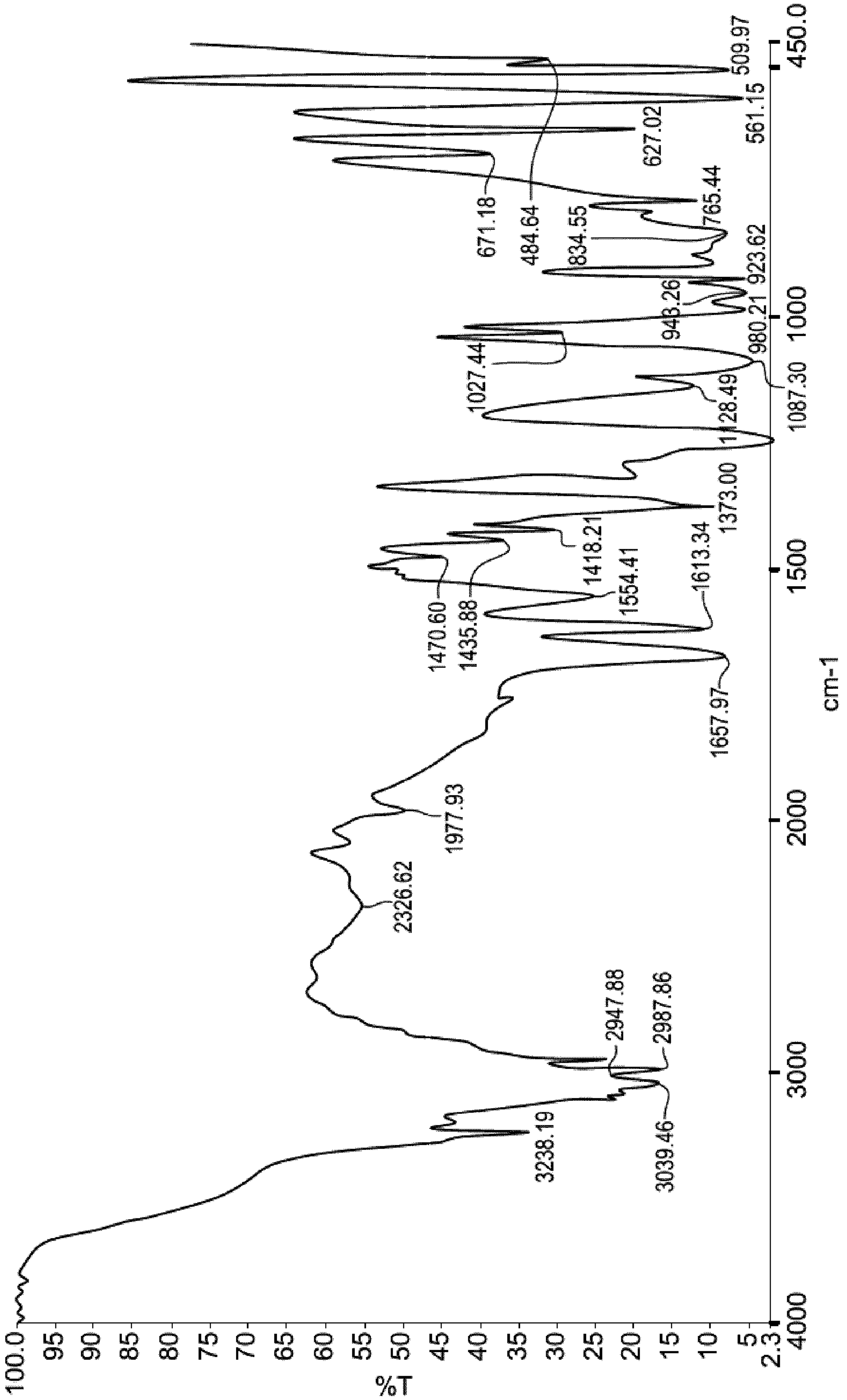
%T
cm-1
100.0
95
90
85
80
75
70
65
60
55
50
45
40
35
30
25
20
15
10
5
2.3
4000
3000
2000
1500
1000
450.0
3238.19
3039.46
2947.88
2987.86
2326.62
1977.93
1657.97
1470.60
1435.88
1554.41
1613.34
1418.21
1373.00
1128.49
1087.30
1027.44
980.21
943.26
923.62
834.55
765.44
671.18
484.64
627.02
561.15
509.97

[Fig. 6]

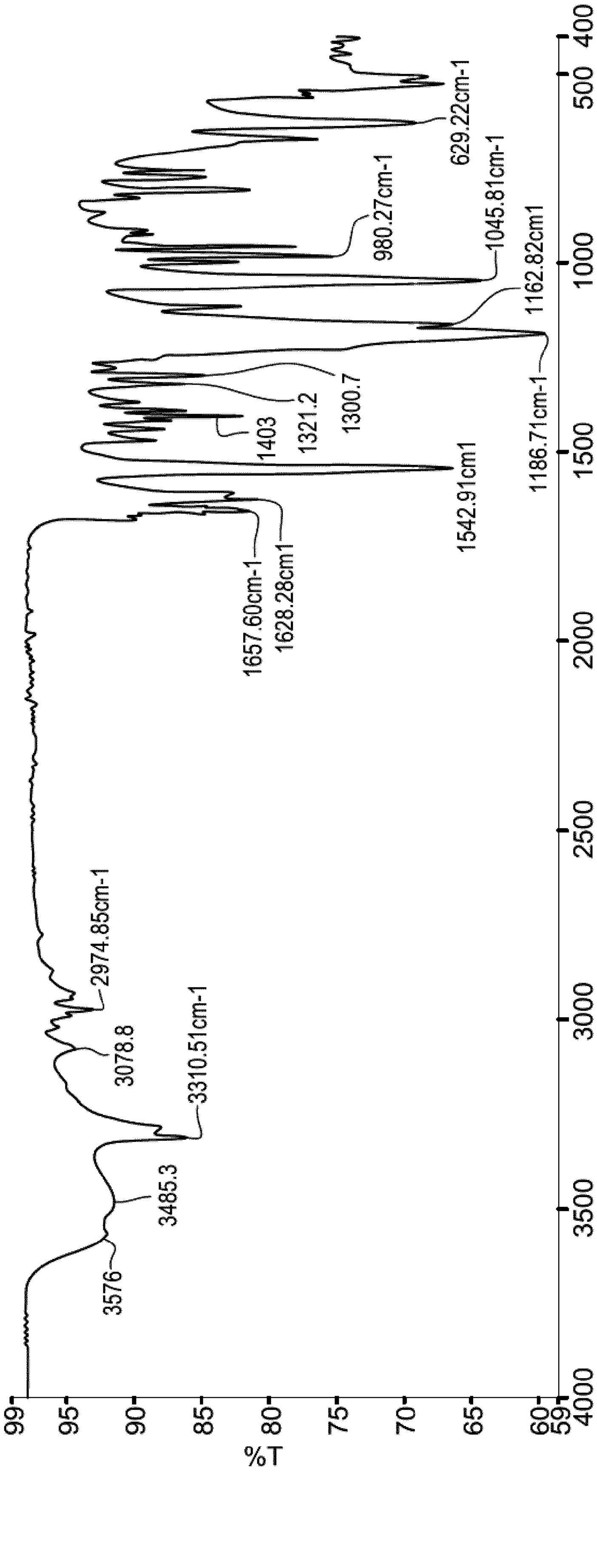
%T
99
95
90
85
80
75
70
65
60
59
4000
3500
3000
2500
2000
1500
1000
500
400
3576
3485.3
3310.51cm-1
3078.8
2974.85cm-1
1657.60cm-1
1628.28cm1
1542.91cm1
1403
1321.2
1300.7
1186.71cm-1
1162.82cm1
1045.81cm-1
980.27cm-1
629.22cm-1

[Fig. 7]

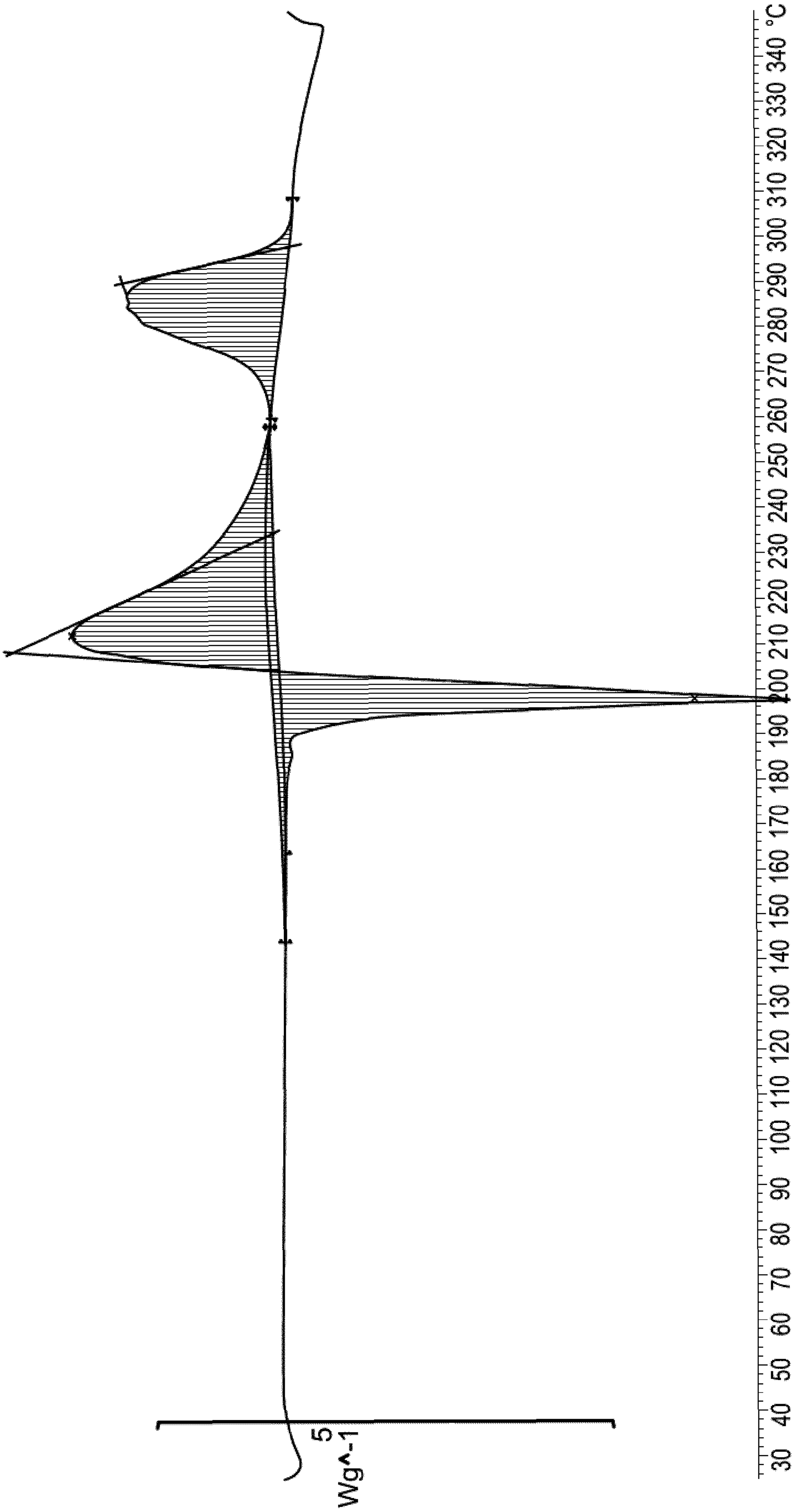
°C
30 40 50 60 70 80 90 100 110 120 130 140 150 160 170 180 190 200 210 220 230 240 250 260 270 280 290 300 310 320 330 340
5
Wg^-1

[Fig. 8]

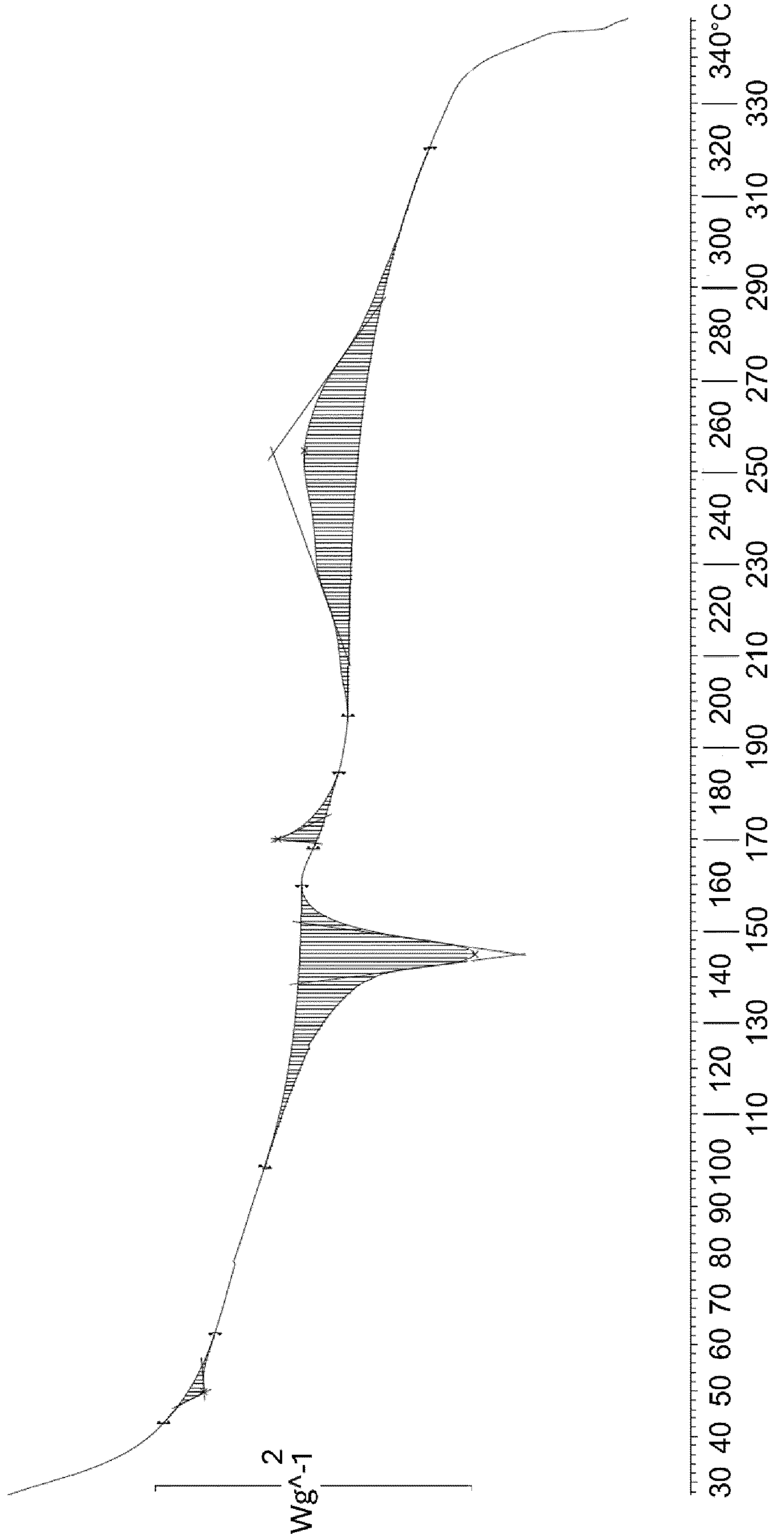
2
Wg^-1
30 40 50 60 70 80 90 100 110 120 130 140 150 160 170 180 190 200 210 220 230 240 250 260 270 280 290 300 310 320 330 340°C

[Fig. 9]

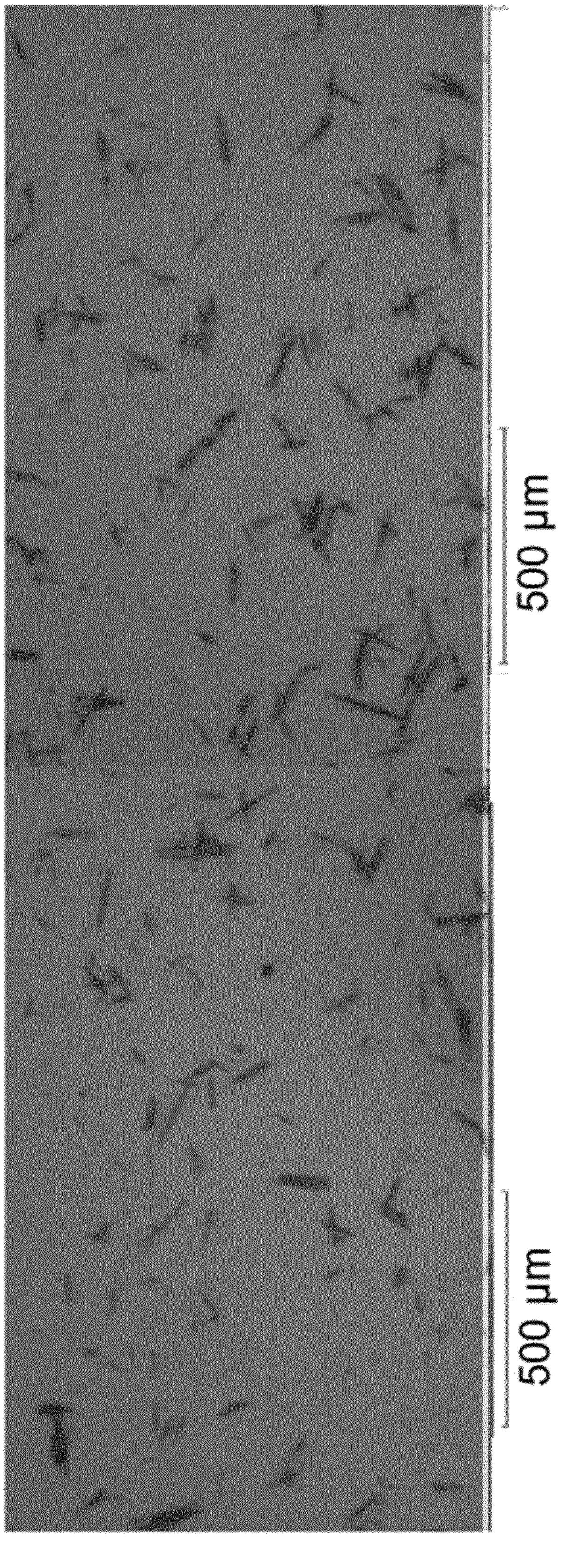

[Fig. 10]

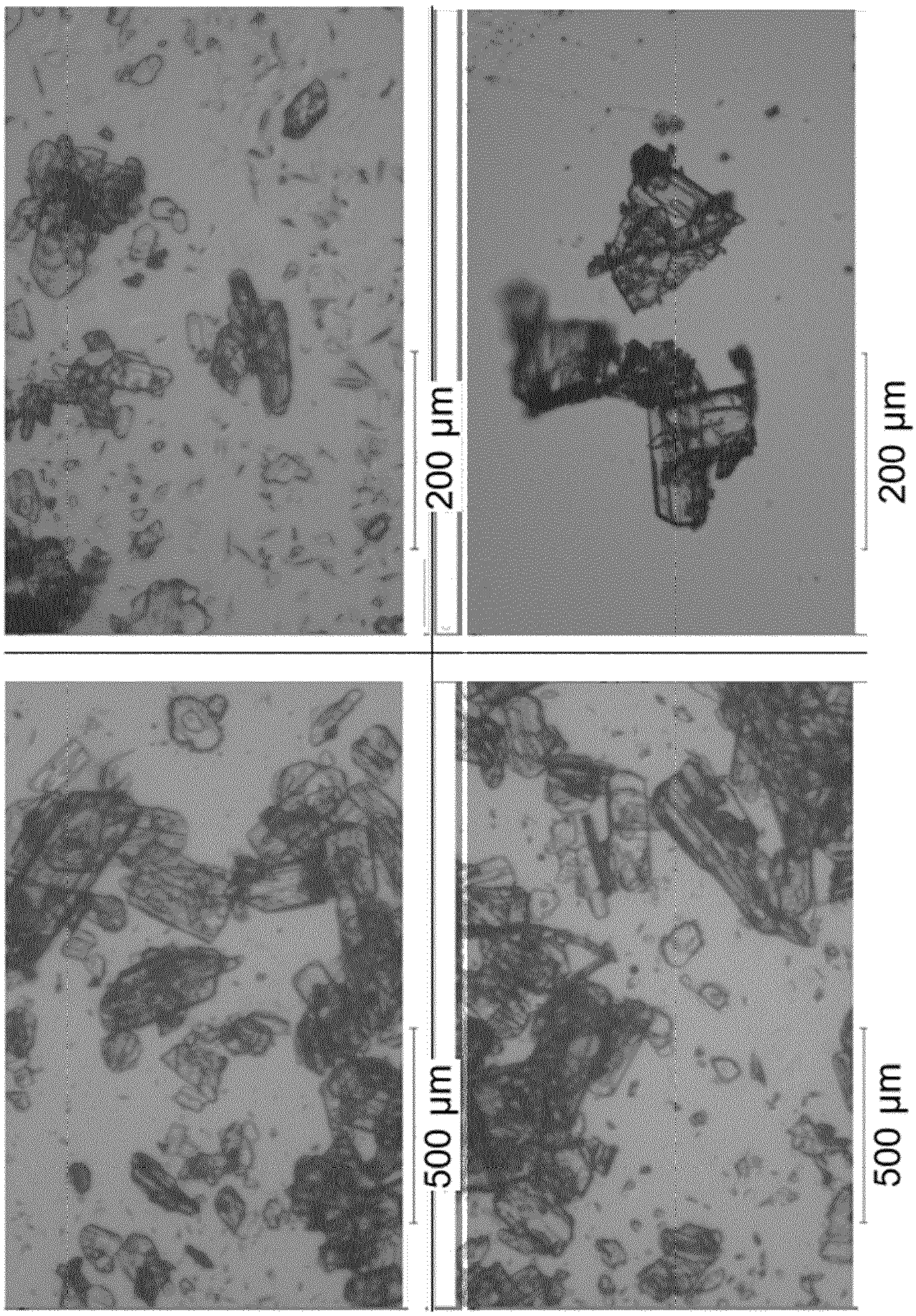

[Fig. 11]

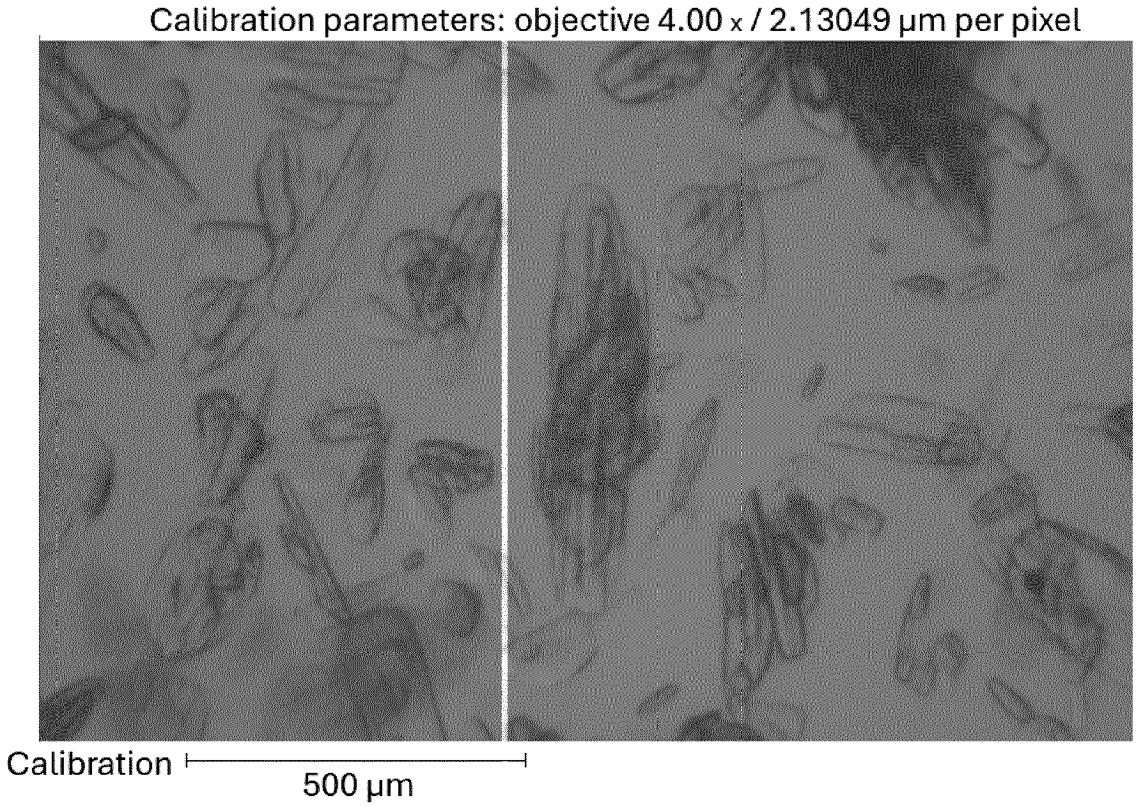
Calibration parameters: objective 4.00 x / 2.13049 µm per pixel
Calibration
500 µm

[Fig. 12]

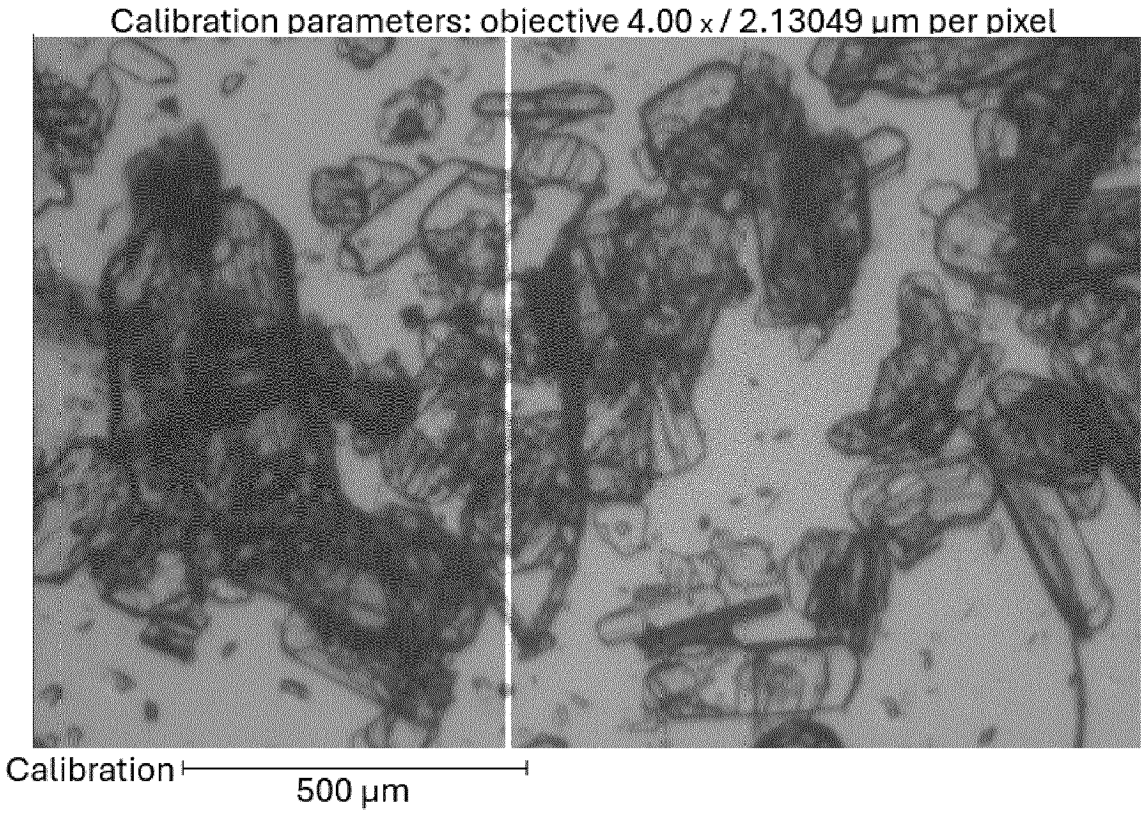
Calibration parameters: objective 4.00 x / 2.13049 µm per pixel
Calibration
500 µm

[Fig. 13]

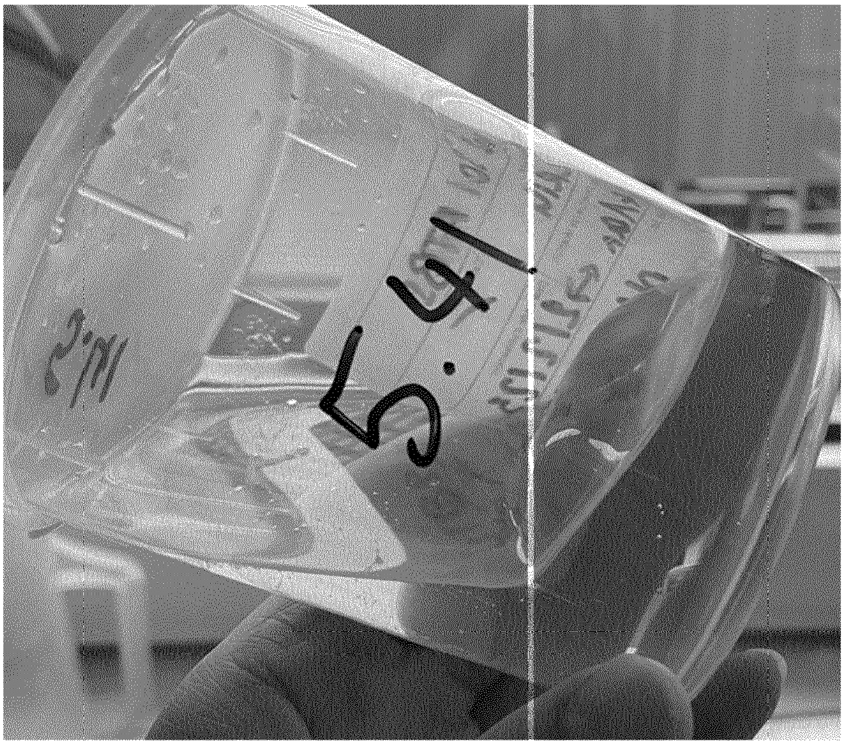

[Fig. 14]

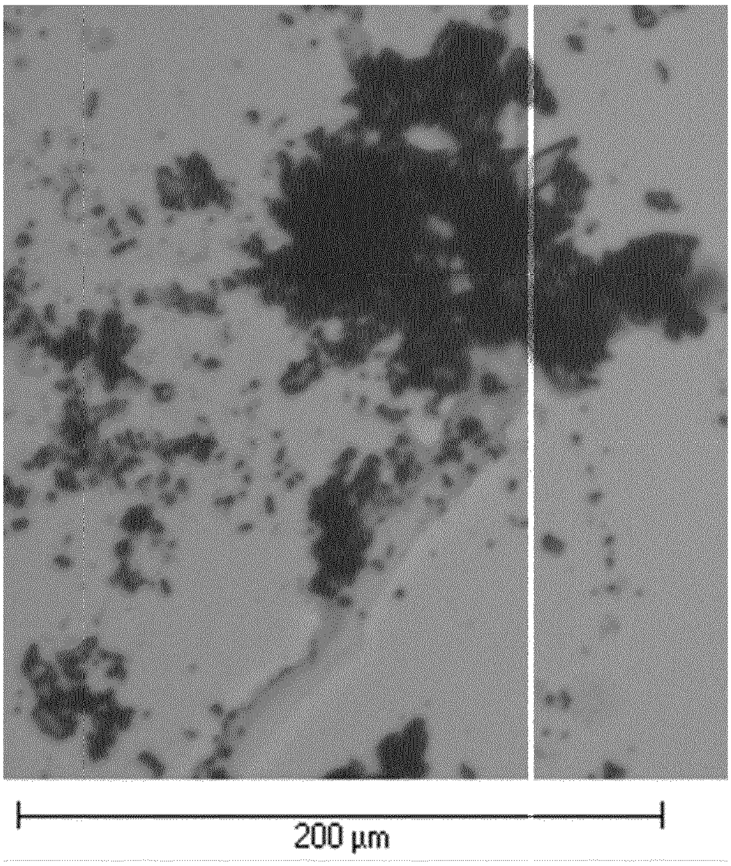

[Fig. 15]

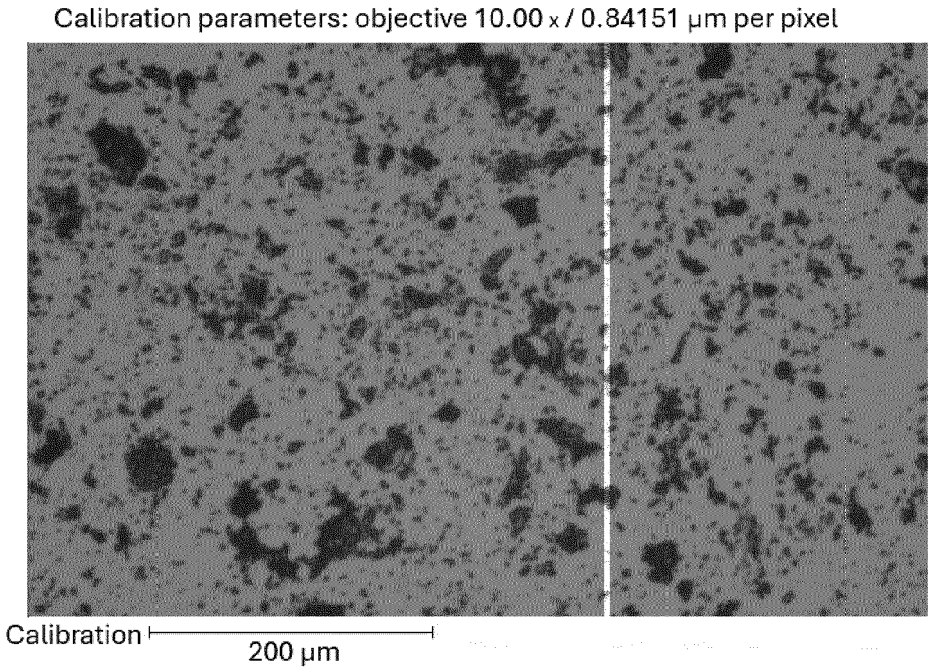
Calibration parameters: objective 10.00 x / 0.84151 μm per pixel
Calibration
200 μm

[Fig. 16]

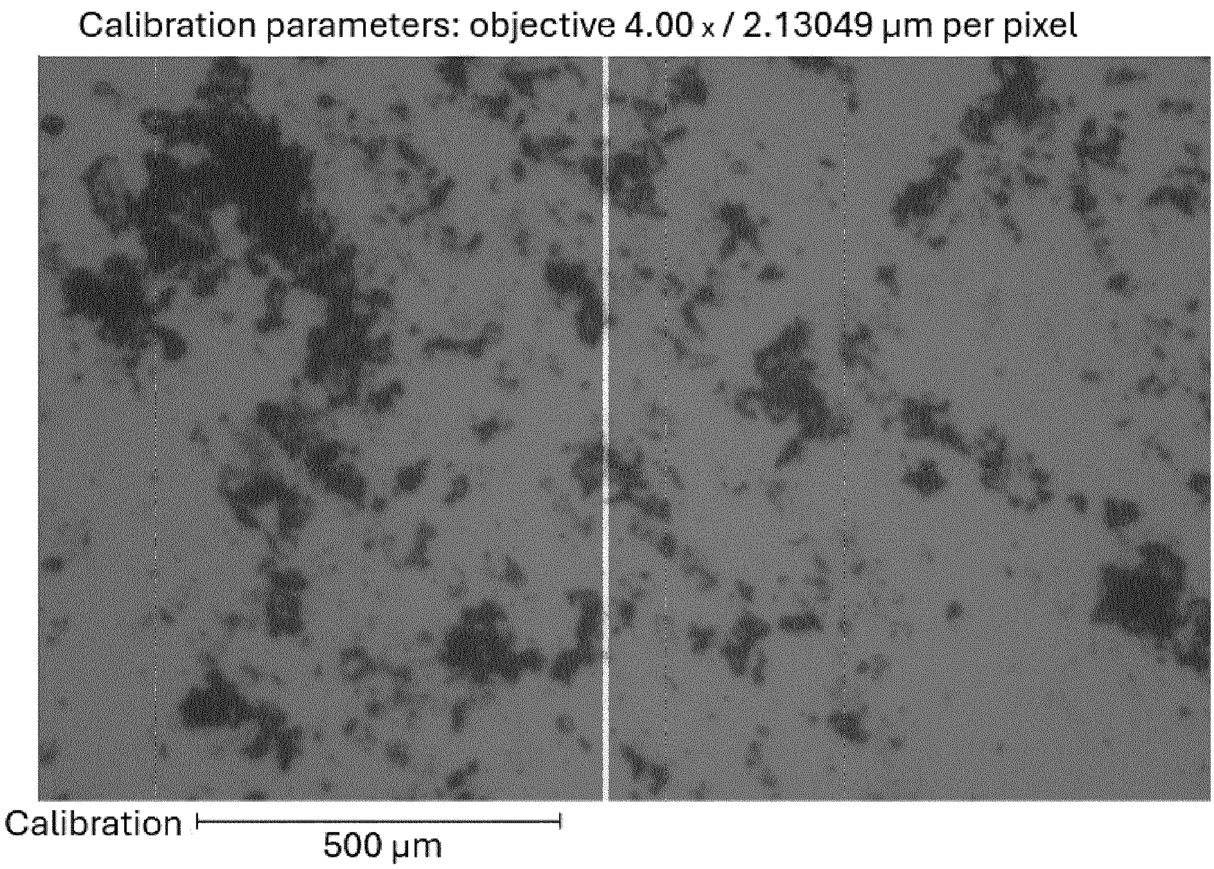
Calibration parameters: objective 4.00 x / 2.13049 μm per pixel
Calibration
500 μm

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4347140 A
- CA 1273888
- WO 9605146 A
- CA 2407869
- CA 1515581
- CA 2682542
- CN 114195685 A
- US 10759746 B2
- US 10647908 B2
- WO 2021123599 A
- EP 2203245 A
- US 6331647 B
- WO 2013079507 A